# EUROPEAN PATENT SPECIFICATION

(11) **EP 3 467 056 B1**
(45) Date of publication and mention of the grant of the patent: **14.07.2021**
(21) Application number: 17806645.2
(22) Date of filing: 30.05.2017
(51) Int. Cl.: C09D 163/00, C09D 5/44, C25D 13/10, C25D 15/00

(54) **CATIONIC ELECTRODEPOSITION COATING COMPOSITION**
ZUSAMMENSETZUNG ZUR ELEKTROLYTISCHEN KATHODENABSCHEIDUNGSBESCHICHTUNG
COMPOSITION DE REVÊTEMENT PAR ÉLECTRODÉPOSITION CATIONIQUE

(30) Priority: 31.05.2016 JP 2016109157
(43) Date of publication of application: 10.04.2019
(73) Proprietor: Nippon Paint Automotive Coatings Co., Ltd., Osaka 573-1153 (JP)
(72) Inventor: MIYAMAE, Nobuhiro, Hirakata-shi Osaka 573-1153 (JP); OHTA, Tatsuo, Hirakata-shi Osaka 573-1153 (JP); INBE, Toshio, Hirakata-shi Osaka 573-1153 (JP)
(74) Representative: Mewburn Ellis LLP
(86) International application number: PCT/JP2017/020005
(87) International publication number: WO 2017/209091

(56) References cited:
- EP-A1- 3 354 701
- WO-A1-2013/008640
- WO-A1-2013/035765
- WO-A1-2015/029757
- JP-A- H 108 291
- JP-A- H10 110 124
- JP-A- 2000 281 944
- JP-A- 2008 184 620
- JP-A- 2008 196 043
- JP-A- 2014 172 944
- US-A1- 2011 024 298
- US-A1- 2011 062 026

## Description

### TECHNICAL FIELD

The present invention relates to a cationic electrodeposition coating composition superior in rust prevention property.

### BACKGROUND OF THE INVENTION

On a surface of an object to be coated such as a metal substrate, a plurality of coating films having various roles are formed, and the coating films protect the object to be coated and, at the same time, impart beautiful appearance. Commonly, as a coating film for imparting corrosion resistance to an object to be coated, electrodeposition coating films formed by electrodeposition coating have widely been used. Electrodeposition coating has widely been used as an under coating method particularly for objects to be coated having a large and complicated shape such as vehicle bodies because coating can thereby be applied in detailed portions of an object even if the object has a complicated shape and the coating can be provided automatically and continuously. As such electrodeposition coating, electrodeposition coating using a cationic electrodeposition coating composition has widely been used.

A coating film is required to impart corrosion resistance to an object to be coated and is also required to have good surface condition. One of possible means for improving the surface condition of a coating film is a method of improving a leveling property of the coating film during the formation of the coating film. For example, it is possible to improve the surface condition of a coating film by leveling the coating film through heat flow during curing such as heating. On the other hand, when an object to be coated has an edge part, it is difficult to coat the edge part even if electrodeposition coating is employed. Moreover, a coating film is sometimes flowed off from the edge part during heating and curing due to the leveling action and heat flow and, as a result, rust prevention property will be deteriorated. Therefore, in coating of an object to be coated having an edge part, means for improving the rust prevention property of the edge part has been demanded.

One example of a method for improving the rust prevention property of an edge part is a method including suppressing the flow of an electrodeposition coating film due to heat flow during heating and curing of an electrodeposition coating film, thereby securing a film thickness at the edge part, and thereby improving the rust prevention property. In this method, in order to suppress the flow of a coating film due to heat flow during heating and curing, there is employed a technique of increasing the viscosity of an electrodeposition coating composition by, for example, adding a thickener to the electrodeposition coating composition. However, the addition of a thickener to an electrodeposition coating composition will reduce the leveling property of a coating film, so that the surface condition of a part other than the edge part, such as a flat part, will be impaired. For this reason, it is generally difficult to secure both improvement in rust prevention property of an edge part of an object to be coated and improvement in the surface condition of a coating film (improvement in coating film smoothness).

JP-A-2010-144104 (Patent Document 1) discloses a cationic electrodeposition coating composition containing (a) an amine-modified epoxy resin having an amine concentration of 1.0 mol/kg or more, (b) a blocked isocyanate compound, (c) cation-exchanged amorphous silica fine particles as essential components. This cationic electrodeposition coating composition is disclosed to be able to form a coating film superior in an edge covering property to an object to be coated and smoothness (in paragraph [0001], etc.). Patent Document 1 discloses that the edge covering property can be enhanced through development of structurally viscous behavior derived from the component (c) (in paragraph [0029], etc.). On the other hand, since the component (c) is a granular material, it aggregates itself in the electrodeposition coating composition, and therefore, a resulting coating film may be poor in smoothness. For example, in paragraph [0032], it is disclosed that an excessively large amount of the component (c) will impair the smoothness.

JP-A-5(1993)-239386 (Patent Document 2) discloses an electrodeposition coating composition characterized by containing at least one lanthanum compound. Patent Document 2 discloses that due to the inclusion of the lanthanum compound in the electrodeposition coating composition, an electrodeposition coating film superior in corrosion resistance can be formed. However, experiments are proving that superior corrosion preventing performance sometimes fails to be exhibited depending on electrodeposition coating conditions when the electrodeposition coating composition merely contains a lanthanum compound.
US 2011/0024298, US 2011/062026, WO 2015/029757, and EP 3 354 701 all also describe cationic electrodeposition coatings aiming to provide rust prevention properties.

### Patent Document

Patent Document 1: JP-A-2010-144104
Patent Document 2: JP-A-5(1993)-239386
Patent Document 3: US 2011/0024298
Patent Document 4: US 2011/062026
Patent Document 5: WO 2015/029757
Patent Document 6: EP 3 354 701

### SUMMARY OF THE INVENTION

### PROBLEMS TO BE RESOLVED BY THE INVENTION

The present invention solves the above-described problems of conventional techniques, and an object of the present invention is to provide a cationic coating composition superior in rust prevention properties, especially an edge part rust prevention property.

### MEANS OF SOLVING THE PROBLEMS

For solving the above-described problems, the present invention provides the following aspects.
[1] A cationic electrodeposition coating composition containing an amine-modified epoxy resin (A), a curing agent (B), a Group-3 element compound (C), and a cationic or nonionic resin (D), wherein
   the amine-modified epoxy resin (A) has a number-average molecular weight within a range of 1,000 to 5,000, and
   the cationic or nonionic resin (D) has a number-average molecular weight of 10,000 or more.
[2] The cationic electrodeposition coating composition mentioned above, wherein the cationic or nonionic resin (D) is one or more species selected from the group consisting of a polyacrylamide resin, a chitosan resin, and an amine-modified epoxy resin.
[3] The cationic electrodeposition coating composition mentioned above, wherein the polyacrylamide resin is a cationic polyacrylamide resin.
[4] The cationic electrodeposition coating composition mentioned above, wherein the Group-3 element compound (C) is one or more species selected from the group consisting of lanthanum oxide, lanthanum hydroxide, neodymium oxide, neodymium hydroxide, a mixture of lanthanum oxide and an organic acid, a mixture of lanthanum hydroxide and an organic acid, a mixture of neodymium oxide and an organic acid, and a mixture of neodymium hydroxide and an organic acid.
[5] The cationic electrodeposition coating composition mentioned above, wherein
   a deposited electrodeposition coating film of the cationic electrodeposition coating composition has a coating film viscosity of 10 Pa·s or less at 105°C, and
   the deposited electrodeposition coating film has a static viscosity of 200 to 5000 Pa·s at 105°C.
[6] The cationic electrodeposition coating composition mentioned above, wherein the cationic electrodeposition coating composition has a coating material viscosity of 10 mPa·s or less at 23°C.
[7] The cationic electrodeposition coating composition mentioned above, wherein the cationic electrodeposition coating composition further contains a bismuth compound and the bismuth compound has an average particle size of 1 to 500 nm.
[8] A method for forming a cured electrodeposition coating film, including a step of performing electrodeposition coating by immersing an object to be coated in the cationic electrodeposition coating composition mentioned above, and then forming a cured electrodeposition coating film having a film thickness of 25 to 50 µm on the object to be coated by performing heating and curing.
[9] The method for forming a coating film mentioned above, wherein the object to be coated mentioned above has an edge part, and in an event that the object to be coated having the cured electrodeposition coating film formed has been subjected to a salt water spray test, a number of rust colonies formed per 1 cm² of a coated edge part is less than 5 colonies/cm².

### ADVANTAGEOUS EFFECT OF THE INVENTION

It is possible to form a cured electrodeposition coating film being superior in rust prevention properties, especially, an edge part rust prevention property, and having a superior coating film appearance by performing electrodeposition coating using a cationic electrodeposition coating composition of the present invention.

### DETAILED DESCRIPTION OF THE PREFERRED EMBODIMENTS

The cationic electrodeposition coating composition of the present invention contains:
an amine-modified epoxy resin (A),
a curing agent (B),
a Group-3 element compound (C), and
a cationic or nonionic resin (D). In this configuration, the amine-modified epoxy resin (A) has a number-average molecular weight within a range of 1,000 to 5,000, and the cationic or nonionic resin (D) has a number-average molecular weight of 10,000 or more. In the following, respective components are described in detail.

### Amine-modified epoxy resin (A)

The amine-modified epoxy resin (A) is a coating film-forming resin for constituting an electrodeposition coating film. As the amine-modified epoxy resin (A), a cationically modified epoxy resin obtained by modifying an oxirane ring in a resin skeleton with an organic amine compound may be preferable. Generally, a cationically modified epoxy resin is prepared by ring-opening an oxirane ring in a starting raw material resin molecule via a reaction with a primary amine, secondary amine or tertiary amine and/or an amine of an acid salt thereof. Typical examples of the starting raw material resin include polyphenol polyglycidyl ether type epoxy resins, which are reaction products of polycyclic phenol compounds, such as bisphenol A, bisphenol F, bisphenol S, phenol novolac, and cresol novolac, with epichlorohydrin. Examples of other starting raw material resins include the oxazoline ring-containing epoxy resins disclosed in JP-A-5-306327. Such epoxy resins can be prepared via a reaction of a diisocyanate compound or a bisurethane compound obtained by blocking isocyanate groups of a diisocyanate compound with a lower alcohol such as methanol and ethanol, with epichlorohydrin.

The starting raw material resin can be chain-extended with a bifunctional polyester polyol, a polyether polyol, a bisphenol, a dibasic carboxylic acid, or the like before a ring-opening reaction of an oxirane ring with an amine, and then used. Especially, a bisphenol with which chain extension is performed can be used during the ring-opening reaction of an oxirane ring with an amine.

Likewise, before a ring-opening reaction of an oxirane ring with an amine, to control a molecular weight or an amine equivalent or improve heat flowability, the starting raw material resin can be provided with addition of a monohydroxy compound such as 2-ethylhexanol, nonylphenol, ethylene glycol mono-2-ethylhexyl ether, ethylene glycol mono-n-butyl ether, propylene glycol mono-2-ethylhexyl ether, or a monocarboxylic acid such as octylic acid to some oxirane rings and then used.

Examples of an amine that can be used when ring-opening an oxirane ring and thereby introducing an amino group include a primary amine, secondary amine, or tertiary amine and/or an acid salt thereof, such as butylamine, octylamine, diethylamine, dibutylamine, methylbutylamine, monoethanolamine, diethanolamine, N-methylethanolamine, triethylamine, N,N-dimethylbenzylamine, and N,N-dimethylethanolamine. Moreover, a ketimine-blocked primary amino group-containing secondary amine such as aminoethylethanolamine methyl isobutyl ketimine, and diethylene triamine diketimine can also be used. To open all oxirane rings, such amines need to be reacted by at least equivalent for the oxirane rings.

In the present invention, the number-average molecular weight of the amine-modified epoxy resin (A) is within a range of 1,000 to 5,000. The condition that the number-average molecular weight is 1,000 or more affords good physical properties of a resulting cured electrodeposition coating film such as solvent resistance and corrosion resistance. On the other hand, the condition that the number-average molecular weight is 5,000 or less makes it easy to adjust the viscosity of the amine-modified epoxy resin and possible to perform smooth synthesis, and makes it easy to handle emulsification and dispersion of the resulting amine-modified epoxy resin (A). The number-average molecular weight of the amine-modified epoxy resin (A) may preferably be within a range of 1,600 to 3,200.

In the present description, the number-average molecular weight is a number-average molecular weight in terms of polystyrene as measured by gel permeation chromatography (GPC).

The amine-modified epoxy resin (A) may preferably have an amine value within a range of 20 to 100 mg KOH/g. The condition that the amine value of the amine-modified epoxy resin (A) is 20 mg KOH/g or more leads to good emulsification-dispersion stability of the amine-modified epoxy resin (A) in an electrodeposition coating composition. On the other hand, the condition that the amine value is 100 mg KOH/g or less leads to a proper amount of amino groups in a cured electrodeposition coating film and has no possibility to lower the water resistance of a coating film. The amine value of the amine-modified epoxy resin (A) may preferably be within a range of 20 to 80 mg KOH/g.

The amine-modified epoxy resin (A) may preferably have a hydroxyl value within a range of 50 to 400 mg KOH/g. The condition that the hydroxyl value is 50 mg KOH/g or more leads to good curing of a cured electrodeposition coating film. On the other hand, the condition that the hydroxyl value is 400 mg KOH/g or less leads to a proper amount of hydroxyl groups remaining in a cured electrodeposition coating film and has no possibility to lower the water resistance of a coating film. The hydroxyl value of the amine-modified epoxy resin (A) may preferably be within a range of 100 to 300 mg KOH/g.

In the cationic electrodeposition coating composition of the present invention, use of an amine-modified epoxy resin (A) having a number-average molecular weight of 1,000 to 5,000, an amine value of 20 to 100 mg KOH/g, and a hydroxyl value of 50 to 400 mg KOH/g affords an advantage that superior corrosion resistance can thereby be imparted to an object to be coated.

As the amine-modified epoxy resin (A), amine-modified epoxy resins differing in amine value and/or hydroxyl value may be used in combination, if necessary. When two or more amine-modified epoxy resins differing in amine value and hydroxyl value are used in combination, the average amine value and the average hydroxyl value calculated on the basis of the mass ratio of the amine-modified epoxy resins to be used are preferably within the above-mentioned numerical values. As the amine-modified epoxy resins (A) to be used in combination, an amine-modified epoxy resin having an amine value of 20 to 50 mg KOH/g and a hydroxyl value of 50 to 300 mg KOH/g and an amine-modified epoxy resin having an amine value of 50 to 200 mg KOH/g and a hydroxyl value of 200 to 500 mg KOH/g are preferably used in combination. Use of such a combination affords an advantage that superior corrosion resistance can thereby be imparted because the core part of an emulsion is thereby made more hydrophobic and the shell part of the emulsion is made more hydrophilic.

The cationic electrodeposition coating composition of the present description may contain an amino group-containing acrylic resin, an amino group-containing polyester resin, or the like in addition to the amine-modified epoxy resin (A), if necessary.

### Curing agent (B)

The curing agent (B) contained in the cationic electrodeposition coating composition of the present invention is a coating film-forming resin that undergoes a curing reaction with the amine-modified epoxy resin (A) under a heating condition. As the curing agent (B), a melamine resin or a blocked isocyanate curing agent is suitably used. The blocked isocyanate curing agent that can be suitably used as the curing agent (B) can be prepared by blocking a polyisocyanate with an encapsulant.

Examples of the polyisocyanate include aliphatic diisocyanates such as hexamethylene diisocyanate (including a trimer), tetramethylene diisocyanate and trimethylhexamethylene diisocyanate; cycloaliphatic polyisocianates such as isophorone diisocyanate and 4,4'-methylene-bis-(cyclohexyl isocyanate); aromatic diisocyanates such as 4,4'-diphenylmethane diisocyanate, tolylene diisocyanate and xylylene diisocyanate; and modified materials thereof (e.g., urethanized materials, materials modified with carbodiimide, uretdione, uretonimine, biuret and/or isocyanurate).

Examples of the encapsulant that may preferably be used include monohydric alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oximes such as dimethyl ketoxime, methyl ethyl ketoxime, methyl isobutyl ketoxime, methyl amyl ketoxime and cyclohexanone oxime; and lactams typified by ε-caprolactam and γ-butyrolactam.

The blocking ratio of the blocked isocyanate curing agent may preferably be 100%. This affords an advantage that the storage stability of the electrodeposition coating composition is improved.

As the blocked isocyanate curing agent, a curing agent prepared by blocking an aliphatic diisocyanate with an encapsulant and a curing agent prepared by blocking an aromatic diisocyanate with an encapsulant are preferably be used in combination.

The blocked isocyanate curing agent preferentially reacts with the primary amine of the amine-modified epoxy resin (A), and further reacts with a hydroxyl group to be cured.

Examples of the melamine resin include a partially or completely methylolated melamine resin obtained by reacting melamine with formaldehyde, a partial or complete alkyl ether type melamine resin obtained by partially or completely etherifying a methylol group of a methylolated melamine resin with an alcohol component, an imino group-containing melamine resin, and mixture type melamine resins thereof. Examples of the alkyl ether type melamine resin include methylated melamine resin, butylated melamine resin, and methyl/butyl mixed alkyl type melamine resin.

As the curing agent, at least one curing agent selected from the group consisting of organic curing agents such as phenol resin, silane coupling agents, and metal curing agents may be used in combination with the above-mentioned melamine resin and/or blocked isocyanate curing agent.

### Group-3 element compound (C)

The cationic electrodeposition coating composition of the present invention contains a Group-3 element compound (C). Due to the inclusion of the Group-3 element compound (C) in the cationic electrodeposition coating composition, a cured electrodeposition coating film superior in rust prevention property will be obtained. The Group-3 element compound (C) may preferably be one or more species selected from the group consisting of lanthanum oxide, lanthanum hydroxide, neodymium oxide, neodymium hydroxide, a mixture of lanthanum oxide and an organic acid, a mixture of lanthanum hydroxide and an organic acid, a mixture of neodymium oxide and an organic acid, and a mixture of neodymium hydroxide and an organic acid. The Group-3 element compound (C) may more preferably be a lanthanum compound, and the Group-3 element compound (C) may even more preferably be one or more species selected from the group consisting of lanthanum oxide, lanthanum hydroxide, a mixture of lanthanum oxide and an organic acid, and a mixture of lanthanum hydroxide and an organic acid.

In the event that at least one species selected from the group consisting of lanthanum oxide, lanthanum hydroxide, neodymium oxide, and neodymium hydroxide is used as the Group-3 element compound (C), these Group-3 element compounds may be in the form of a powder. When the Group-3 element compound is in the form of a powder, the average particle size thereof may preferably be 0.01 to 10 µm, and more preferably 0.05 to 2 µm. In the present description, the average particle diameter refers to a volume-average particle diameter D50, which is a value measured with a dispersion diluted with ion-exchanged water such that an appropriate signal level is attained using a laser Doppler type particle size analyzer ("Microtrac UPA150" manufactured by Nikkiso Co., Ltd.).

When a mixture of lanthanum oxide and/or lanthanum hydroxide and an organic acid is used as the Group-3 element compound (C), the mixture can be prepared by mixing lanthanum oxide and/or lanthanum hydroxide with an organic acid in advance. As the organic acid, one or more species selected from the group consisting of hydroxymonocarboxylic acids and sulfonic acids can suitably be used.

Examples of the hydroxycarboxylic acid include the following compounds:
- monohydroxymonocarboxylic acids, particularly aliphatic monohydroxymonocarboxylic acids, which have 2 to 5, preferably 2 to 4 carbon atoms in total, such as lactic acid and glycolic acid; and
- dihydroxy monocarboxylic acids, particularly aliphatic dihydroxy monocarboxylic acids, which have 3 to 7, preferably 3 to 6 carbon atoms in total, such as dimethylol propionic acid (DMPA) and glyceric acid.

The sulfonic acid is an organic sulfonic acid, and examples thereof include alkanesulfonic acids having 1 to 5, preferably 1 to 3 carbon atoms in total, such as methanesulfonic acid and ethanesulfonic acid.

The organic acid may preferably be one or more species selected from the group consisting of lactic acid, dimethylolpropionic acid and methanesulfonic acid.

The form of use of the organic acid is not particularly limited, and examples thereof include a solid form, a liquid form, and a solution form with the organic acid dissolved in a solvent (especially, an aqueous solution form). The organic acid may preferably be used in the form of an aqueous solution. Examples of a solvent that can be used for the preparation of an aqueous solution of an organic acid include water such as ion-exchanged water, purified water and distilled water, and an aqueous solvent containing water as a main component. The aqueous solvent may contain an optional organic solvent (e.g., a water-soluble or water-miscible organic solvent such as alcohols, esters, and ketones) in addition to water.

In the event that a mixture of lanthanum oxide and/or lanthanum hydroxide and an organic acid is prepared in advance, the ratio of the number of moles of lanthanum in lanthanum oxide and/or lanthanum hydroxide to the number of moles of the organic acid may preferably be within a range of lanthanum : organic acid = 1 : 0.3 to 1 : 2.7. Lanthanum is a rare earth element that becomes a trivalent cation. Hydroxymonocarboxylic acids and sulfonic acids that can be suitably used as the organic acid are monovalent acids. Therefore, the case where the ratio of the number of moles of lanthanum to the number of moles of an organic acid is within the range of lanthanum : organic acid = 1 : 0.3 to 1 : 2.7 is a state where the total valence of anions derived from the organic acid (the number of moles of the organic acid) is less than the total valence of cations derived from lanthanum metal element (that is, the number of moles of the metal element × 3). Using lanthanum oxide and/or lanthanum hydroxide and an organic acid in the above ratio makes it possible to prepare a cationic electrodeposition coating composition that provides a cured coating film having particularly superior edge rust prevention performance and superior coating film appearance. The ratio of the numbers of moles may more preferably be within a range of lanthanum : organic acid = 1 : 0.6 to 1 : 2.4, more preferably lanthanum : organic acid = 1 : 0.9 to 1 : 2.1.

The content of the Group-3 element compound (C) contained in the cationic electrodeposition coating composition of the present invention may preferably be an amount equivalent to 0.01 to 2% by mass, more preferably an amount equivalent to 0.05 to 1.5% by mass, and even more preferably an amount equivalent to 0.05 to 1% by mass, in terms of metal element based on the resin solid content of the cationic electrodeposition coating composition. When the amount of the Group-3 element compound (C) is less than the above range, superior rust prevention performance may not be obtained. If the content of the Group-3 element compound (C) exceeds the above range, the coating film appearance of a resulting cured electrodeposition coating film may be poor.

In the present description, the "resin solid content of a cationic electrodeposition coating composition" means the solid mass of a coating film-forming resin. Specifically, it means the total amount of the resin solid content of the amine-modified epoxy resin (A) and the curing agent (B).

"In terms of metal element" means determining the amount of a target metal element by multiplying the content of a Group-3 element compound by a metal element conversion factor (a factor for converting the amount of the Group-3 element compound to the amount of the metal element, specifically, a value calculated by dividing the atomic weight of the Group-3 element in the Group-3 element compound by the molecular weight of the Group-3 element compound).

For example, when the Group-3 element compound (C) is lanthanum oxide (La₂O₃, molecular weight: 325.8), the content of lanthanum in terms of metal element in an electrodeposition coating composition containing 0.1% by mass of lanthanum oxide is calculated to be 0.0853% by mass by the calculation: 0.1% by mass% × ((138.9 × 2) ÷ 325.8).

When the content ratio of the Group-3 element compound (C) is less than the above range, sufficient edge part rust prevention performance may not be obtained. When the content ratio of the Group-3 element compound (C) exceeds the above range, the solubility and the uniform dispersibility of the Group-3 element compound (C) may deteriorate and the storage stability of the cationic electrodeposition coating composition may deteriorate.

### Cationic or nonionic resin (D)

The cationic electrodeposition coating composition of the present invention contains a cationic or nonionic resin (D). Due to the inclusion of both the Group-3 element compound (C) and the cationic or nonionic resin (D) in the cationic electrodeposition coating composition, a cationic electrodeposition coating composition superior in edge part rust prevention property is obtained.

In the present invention, the cationic or nonionic resin (D) is required to have a number-average molecular weight of 10,000 or more. The condition that the number-average molecular weight of the cationic or nonionic resin (D) is 10,000 or more affords an advantage that good corrosion resistance can be secured even when forming a cured electrodeposition coating film having a larger film thickness, for example, a film thickness of 25 to 50 µm. The number-average molecular weight may preferably be within a range of 10,000 to 20,000,000.

Examples of the cationic or nonionic resin (D) include one or more species selected from the group consisting of a polyacrylamide resin, a chitosan resin, and an amine-modified epoxy resin. The cationic or nonionic resin (D) may preferably be one or more resins selected from the group consisting of a polyacrylamide resin and an amine-modified epoxy resin.

The term "polyacrylamide resin" referred to herein means a resin containing an acrylamide unit in its polymer backbone. Specific examples of the polyacrylamide resin as the component (D) include a cationic polyacrylamide resin and a nonionic polyacrylamide resin. The polyacrylamide resin can be prepared, for example, by polymerizing a radically polymerizable monomer containing (meth)acrylamide. The radically polymerizable monomer may optionally contain (meth)acrylamide and other radically polymerizable monomers. The term "(meth)acrylamide" as referred to herein means acrylamide and/or methacrylamide.

For example, in the preparation of a cationic polyacrylamide resin, the amount of (meth)acrylamide contained in the radically polymerizable monomer may preferably be 70% by mass or more. For example, in the preparation of a nonionic polyacrylamide resin, the amount of (meth)acrylamide contained in the radically polymerizable monomer may preferably be 25% by mass or more.

Examples of the other radically copolymerizable monomers include cationic vinyl monomers, anionic vinyl monomers, N-substituted (meth)acrylamides, sodium (meth)allylsulfonate, and a vinyl monomer.

Examples of the cationic vinyl monomer include allylamine, N,N-dimethylaminoethyl (meth)acrylate, N,N-diethylaminoethyl (meth)acrylate, N,N-dimethylaminopropyl (meth)acrylamide, N,N- diethylaminopropyl (meth)acrylamide, and salts thereof.

Examples of the anionic vinyl monomer include monocarboxylic acids such as (meth)acrylic acid and crotonic acid, dicarboxylic acids such as maleic acid, fumaric acid, itaconic acid, muconic acid, and citraconic acid, organic sulfonic acids such as vinylsulfonic acid, styrenesulfonic acid, and 2-acrylamido-2-methylpropanesulfonic acid; and sodium salts and potassium salts of such organic acids.

The N-substituted (meth)acrylamide are not particularly limited as long as they are N-substituted (meth)acrylamides other than the above-mentioned cationic vinyl monomers, and those conventionally known can be used and examples thereof include N,N-dimethyl(meth)acrylamide, N,N-diethyl(meth)acrylamide, N,N-diisopropyl(meth)acrylamide, N-methyl(meth)acrylamide, N-ethyl(meth)acrylamide, N-isopropyl(meth)acrylamide, and N-t-butyl(meth)acrylamide.

The aforementioned vinyl monomers are monomers other than the above-mentioned monomers, and examples thereof include acrylic acid alkyl esters such as methyl (meth)acrylate, ethyl (meth)acrylate, and butyl (meth)acrylate; allyl monomers having an allyl group such as allyl alcohol; (meth)acrylonitrile; bisacrylamide monomers such as methylenebis(meth)acrylamide and ethylenebis(meth)acrylamide; diacrylate monomers such as ethylene glycol di(meth)acrylate and diethylene glycol di(meth)acrylate; and polyfunctional vinyl monomers such as diallylamine, divinylbenzene; 1,3,5-triacroylhexahydro-S-triazine, triallyl isocyanurate, triallylamine, and tetramethylolmethane tetraacrylate.

The polyacrylamide resin can be prepared by polymerizing a radically polymerizable monomer containing (meth)acrylamide in a solvent such as water and/or an organic solvent in the presence of a polymerization initiator (azo type, peroxide type, redox type, etc.), for example. The polymerization temperature can be appropriately chosen depending on the type of the polymerization initiator, etc., and may be, for example, 50 to 200°C, and more preferably 90 to 160°C. The polymerization reaction time may be, for example, 0.5 to 12 hours. It is also permitted to use a modified polyacrylamide resin obtained by reacting or neutralizing a functional group (for example, an acrylamide group or an anionic group) possessed by the polyacrylamide resin obtained through the above polymerization reaction.

As the polyacrylamide resin, a commercially available product may be used. Examples of such a commercially available product include ACCOFLOC Series (nonionic polyacrylamide resins), Sumifloc Series (nonionic polyacrylamide resins), and ARONFLOC Series (cationic polyacrylamide resins) produced by MT AquaPolymer, Inc., and POLYFLOC C Series (cationic polyacrylamide resins) and POLYFLOC N Series (nonionic polyacrylamide resins) produced by Nittobo Medical Co., Ltd.

The polyacrylamide resin may more preferably be a cationic polyacrylamide resin. This is because the cationic polyacrylamide resin has an interaction force with the coating film-forming resin. The cationic polyamide resin can be prepared, for example, by copolymerizing (meth)acrylamide with the cationic vinyl monomer and/or its derivative. Of the above-mentioned cationic vinyl monomers, for example, N,N-dimethylaminoethyl (meth)acrylate can be suitably used. Examples of the above-mentioned derivative include methyl chloride quaternary salts of the above-mentioned cationic vinyl monomers.

As the cationic polyamide resin, a strong cationic polyacrylamide resin may more preferably be used. The strong cationic polyacrylamide resin means a polyacrylamide resin having a relatively large number of moles of cations present in the resin. Examples of the strong cationic polyacrylamide resin include a cationic polyacrylamide resin having a cation degree of 1.0 meq/g or more.

When a polyacrylamide resin is used as the component (D), the number-average molecular weight thereof may preferably be within a range of 100,000 to 20,000,000, more preferably within a range of 1,000,000 to 20,000,000.

The number-average molecular weight of the component (D) such as a polyacrylamide resin can be measured by, for example, GPC.

When a polyacrylamide resin is used as the component (D), the amount of the polyacrylamide resin contained in the cationic electrodeposition coating composition may preferably be 0.001 to 1 part by mass per 100 parts by mass of the resin solid content of the amine-modified epoxy resin (A) and the curing agent (B). When the amount of the polyacrylamide resin is less than 0.001 parts by mass, a sufficient effect of improving an edge part rust prevention property derived from the addition of the polyacrylamide resin may not be obtained. When the amount of the polyacrylamide resin exceeds 1 part by mass, the coating film appearance of a resulting cured electrodeposition coating film may be poor.

The amine-modified epoxy resin as the component (D) is required to have a number-average molecular weight of 10,000 or more. The amine-modified epoxy resin having a number-average molecular weight of 10,000 or more can be prepared in the same manner as the amine-modified epoxy resin (A) using, for example, a polyphenol polyglycidyl ether type epoxy resin having a number-average molecular weight of 10,000 or more.

When an amine-modified epoxy resin is used as the component (D), the number-average molecular weight thereof may preferably be within a range of 10,000 to 5,000,000, and more preferably within a range of 10,000 to 2,000,000.

When the amine-modified epoxy resin is used as the component (D), the amount of the amine-modified epoxy resin contained in the cationic electrodeposition coating composition may preferably be 1 to 20 parts by mass, more preferably 5 to 15 parts by mass, per 100 parts by mass of the resin solid content of the amine-modified epoxy resin (A) and the curing agent (B). When the amount of the amine-modified epoxy resin is less than 1 part by mass, a sufficient effect of improving an edge part rust prevention property derived from the addition of the amine-modified epoxy resin may not be obtained. When the amount of the amine-modified epoxy resin exceeds 20 parts by mass, the coating film appearance of a resulting cured electrodeposition coating film may be poor.

As the chitosan resin as the component (D), any chitosan resin having a number-average molecular weight of 10,000 or more can be used without any particular restrictions. The chitosan resin can be prepared, for example, by preparing chitosan by deacetylating chitin extracted from shells of crustaceans such as crabs or shrimp and processing the chitosan into a resin.

The chitosan resin to be used as the component (D) may be a commercially available product. Examples of the commercially available product include DAICHITOSAN H (produced by Dainichiseika Color & Chemicals Mfg. Co., Ltd.).

When a chitosan resin is used as the component (D), the number-average molecular weight may preferably be within a range of 100,000 to 5,000,000, and more preferably within a range of 100,000 to 2,000,000.

When a chitosan resin is used as the component (D), the amount of the chitosan resin contained in the cationic electrodeposition coating composition may preferably be 0.01 to 10 parts by mass, more preferably 0.05 to 5 parts by mass, per 100 parts by mass of the resin solid content of the amine-modified epoxy resin (A) and the curing agent (B). When the amount of the chitosan resin is less than 0.01 parts by mass, a sufficient effect of improving an edge part rust prevention property derived from the addition of the chitosan resin may not be obtained. When the amount of the chitosan resin exceeds 10 parts by mass, the coating film appearance of a resulting cured electrodeposition coating film may be poor.

As the component (D), one of the above resins may be used, or two or more resins may be used in combination.

In the present invention, due to the inclusion of the Group-3 element compound (C) and the cationic or nonionic resin (D) in the cationic electrodeposition coating composition, a superior edge part rust prevention property will be obtained. Although this is not bound by theory, inclusion of the cationic or nonionic resin (D) in the cationic electrodeposition coating composition makes it possible, in a step of heating and curing an electrodeposition coating film deposited on an object to be coated, to control shrinkage caused by heating and to force the electrodeposition coating film and the Group-3 element compound (C) both deposited on an edge part to stay. When a deposited electrodeposition coating film is heated, heat flow is generated and shrinkage accompanying a curing reaction occurs. This shrinkage is particularly large when a thick film is formed. The cationic electrodeposition coating composition of the present invention has a function of forcing an electrodeposition coating film and a deposited Group-3 element compound (C) to stay, and therefore, it can be used suitably in the case of forming a cured electrodeposition coating film having a large film thickness, for example, a thickness of 25 to 50 µm.

In the present invention, even when carbon black, for example, is contained as a pigment in the cationic electrodeposition coating composition, the inclusion of the cationic or nonionic resin (D) affords an advantage that a cured electrodeposition coating film having a good rust prevention property can be formed. Carbon black is a black pigment having conductivity. Therefore, when carbon black is contained in a cationic electrodeposition coating composition, there may occur, during an electrodeposition coating step of depositing an electrodeposition coating film, a site where deposition of a Group-3 element compound (C) is inhibited due to the deposition of the carbon black having conductivity. Even in such a case, a superior rust prevention property is obtained because inclusion of the cationic or nonionic resin (D) in the cationic electrodeposition coating composition makes it possible to force an electrodeposition coating film and a deposited Group-3 element compound to stay during a heating and curing step as described above.

### Pigment dispersion paste

The cationic electrodeposition coating composition of the present invention may contain a pigment dispersion paste, if necessary. The pigment dispersion paste is a component that is optionally contained in an electrodeposition coating composition, and it commonly contains a pigment dispersion resin and a pigment.

### Pigment dispersion resin

The pigment dispersion resin is a resin for dispersing a pigment, and it is dispersed in an aqueous medium and then used. As the pigment dispersion resin, there can be used a pigment dispersion resin having a cationic group, such as a modified epoxy resin having at least one member selected from the group consisting of a quaternary ammonium group, a tertiary sulfonium group, and a primary amino group. As the aqueous solvent, there is used ion-exchanged water or water containing a small amount of a hydrophilic solvent such an alcohol.

### Pigment

The pigment is a pigment that is commonly used in electrodeposition coating compositions. Examples of the pigment include inorganic pigments and organic pigments which are usually used, for example, color pigments such as titanium white (titanium dioxide), carbon black, and red iron oxide; extender pigments such as kaolin, talc, aluminum silicate, calcium carbonate, mica, and clay; and antirust pigments such as iron phosphate, aluminum phosphate, calcium phosphate, aluminum tripolyphosphate, aluminum phosphomolybdate, and aluminum zinc phosphomolybdate.

### Production of pigment dispersion paste

The pigment dispersion paste is prepared by mixing a pigment dispersion resin and a pigment. The content of the pigment dispersion resin in the pigment dispersion paste is not particularly limited, and the pigment dispersion resin can be used in an amount of 20 to 100 parts by mass in terms of resin solid content fraction per 100 parts by mass of the pigment.

The solid fraction of the pigment dispersion paste may preferably be 40 to 70% by mass, particularly preferably 50 to 60% by mass, based on the total amount of the pigment dispersion paste.

The "solid content in a pigment dispersion paste" as referred to herein means the mass of all components contained in the pigment dispersion paste that remain in the form of solid even through removal of the solvent. Specifically, it means the total mass of the pigment dispersion resin, the pigment, and all other solid components optionally added that are contained in the pigment dispersion paste.

### Bismuth compound

The cationic electrodeposition coating composition of the present invention may contain a bismuth compound, if necessary. The bismuth compound is a compound containing bismuth and may be, for example, bismuth oxide, bismuth hydroxide, bismuth nitrate, or a mixture thereof. A preferred bismuth compound is at least one species selected from the group consisting of bismuth oxide and bismuth hydroxide.

In the case of using a bismuth compound, the amount of the bismuth compound contained in the electrodeposition coating composition of the present invention may preferably be 0.05 to 1.0% by mass in terms of the metal element based on the amount of the resin solid contained in the electrodeposition coating composition. Due to the condition that the amount of the bismuth compound is within the above range, the resin component can be cured well and the storage stability of the cationic electrodeposition coating composition can be kept good. The content of the bismuth compound in terms of metal element can be determined in the same manner as the above-described content in terms of metal element.

The bismuth compound may preferably have an average particle size of 1 to 500 nm. The condition that the average particle size is within the above range leads to an advantage that good curability is exhibited.

When a bismuth compound is used, it may be used in a state where it has been mixed with an acid component in advance. For example, a pigment dispersion paste containing a bismuth compound may be prepared by mixing the bismuth compound with an acid component in advance, and mixing the resultant mixture during the preparation of a pigment dispersion paste. Examples of a method for preparing a pigment dispersion paste containing a bismuth compound include a preparation method in which a bismuth mixture obtained by mixing a bismuth compound and an acid component (for example, the above-described organic acid) in advance is mixed with a resin component and subsequently a pigment is mixed. In this preparation method, examples of a resin component that can be used include a pigment dispersion resin usually used in the preparation of a pigment dispersion paste, and a mixture of the amine-modified epoxy resin (A) and the curing agent (B) both mentioned above. Such resin components may be used singly or two or more species thereof may be used in combination.

In the field of coatings, organic tin catalysts are commonly used as a curing catalyst. However, organic tin catalysts are catalysts that will possibly be restricted to use in the future from recent environmental control trends. Since the aforementioned bismuth compound is superior in curability, it can be used as an alternative catalyst for organic tin catalysts which are commonly used as a curing catalyst in the field of coatings. Therefore, the use of the bismuth compound affords an advantage that a cationic electrodeposition coating composition with reduced environmental load can be provided.

### Production of cationic electrodeposition coating composition

The electrodeposition coating composition of the present invention can be prepared by mixing an emulsion containing an amine-modified epoxy resin (A) and a curing agent (B), a Group-3 element compound (C), a cationic or nonionic resin (D), and optionally a pigment dispersion paste, additives, etc.

In the preparation of the electrodeposition coating composition, an emulsion is formed by improving the amine-modified epoxy resin (A) in its dispersibility by neutralizing it with a neutralizing acid. As the neutralizing acid to be used for neutralizing the amine-modified epoxy resin (A), it may be preferable to use an organic acid such as formic acid, acetic acid, and lactic acid. The case of using the aforementioned acid as a neutralizing acid for neutralizing and dispersing the amine-modified epoxy resin (A) has an advantage that superior throwing power is attained due to a high degree of dissociation of the acid.

The amount of the neutralizing acid to be used may preferably be within a range of 10 to 25 mg equivalent per 100 g of the resin solids including the amine-modified epoxy resin (A), the curing agent (B) and optionally a coating film forming resin. The lower limit may more preferably be 15 mg equivalent, and the upper limit may more preferably be 20 mg equivalent. Due to the condition that the amount of the neutralized acid is 10 mg equivalent or more, sufficient affinity to water is attained, so that good dispersion in water is established. On the other hand, due to the condition that the amount of the neutralizing acid is 25 mg equivalent or less, a proper amount of electricity is required for deposition, so that the deposition property of coating solids, or the throwing power, is improved.

The curing agent (B) is required in an amount sufficient for reacting with active hydrogen-containing functional groups such as primary or secondary amino groups and hydroxyl groups in the amine-modified epoxy resin (A) during curing to give a good cured coating film. A preferred amount of the curing agent (B) is within a range of 90/10 to 50/50, more preferably 80/20 to 65/35, in terms of the solid mass ratio of the amine-modified epoxy resin (A) to the curing agent (B) (amine-modified epoxy resin (A)/curing agent (B)). The fluidity and the curing rate of an electrodeposition coating film to be deposited can be adjusted by adjusting the solid mass ratio of the amine-modified epoxy resin (A) to the curing agent (B).

The electrodeposition coating composition can be prepared by adding and mixing a resin emulsion in which an amine-modified epoxy resin (A), a curing agent (B) and other optional film-forming resin components are dispersed using a neutralizing acid, a pigment dispersion paste, a Group-3 element compound (C), a cationic or nonionic resin (D), and an optional pigment dispersion paste. The Group-3 element compound (C) may be added after forming a dispersion paste therefrom together with a pigment.

The "solid content of an electrodeposition coating composition" as referred to herein means the mass of all components contained in the electrodeposition coating composition that remain in the form of solid even through removal of the solvent. Specifically, it means the total mass of the amine-modified epoxy resin (A), the curing agent (B), the Group-3 element compound (C), the pigment dispersion resin, the pigment and other solid components optionally added, each contained in the electrodeposition coating composition.

The solid content of the cationic electrodeposition coating composition of the present invention may preferably be 1 to 30% by mass based on the total amount of the electrodeposition coating composition. When the solid content of the electrodeposition coating composition is less than 1% by mass, a reduced amount of an electrodeposition coating film will be deposited, so that it may be difficult to ensure sufficient corrosion resistance. When the solid content of the electrodeposition coating composition exceeds 30% by mass, throwing power or appearance may deteriorate.

The cationic electrodeposition coating composition of the present invention may preferably have a pH of 4.5 to 7. When the pH of the electrodeposition coating composition is less than 4.5, the amount of acid present in the cationic electrodeposition coating composition is excessive, so that coating film appearance or coating workability may be poor. On the other hand, when the pH exceeds 7, the filtration property of the electrodeposition coating composition may deteriorate, and the horizontal appearance of a cured electrodeposition coating film may deteriorate. The pH of the electrodeposition coating composition can be set within the above range by adjusting the amount of a neutralizing acid to be used, the amount of a free acid to be added, etc. More preferably, the pH is 5 to 7.

The pH of the electrodeposition coating composition can be measured using a commercially available pH meter having a temperature compensation function.

The milligram equivalent (MEQ (A)) of an acid per 100 g of the solid content of an electrodeposition coating composition may preferably be 40 to 120. The milligram equivalent (MEQ (A)) of an acid per 100 g of the resin solid content of an electrodeposition coating composition can be adjusted by the amount of a neutralized acid and the amount of a free acid.

MEQ (A) as referred to herein is an abbreviation of mg equivalent (acid), which is the sum total of mg equivalents of all acids per 100 g of the solid content of the paint. MEQ (A) can be measured by precisely weighing about 10 g of a solid of an electrodeposition coating composition, dissolving it in about 50 ml of a solvent (THF: tetrahydrofuran), then performing potentiometric titration using a 1/10 N NaOH solution and thereby determining the amount of an acid contained in the electrodeposition coating composition.

The cationic electrodeposition coating composition of the present invention may optionally contain additives commonly used in the field of coatings, e.g., organic solvents such as ethylene glycol monobutyl ether, ethylene glycol monohexyl ether, ethylene glycol monoethylhexyl ether, propylene glycol monobutyl ether, dipropylene glycol monobutyl ether and propylene glycol monophenyl ether, drying inhibitors, surfactants such as antifoaming agents, viscosity modifiers such as acrylic resin fine particles, cissing inhibitors, inorganic anticorrosive agents such as vanadium salts, copper, iron, manganese, magnesium, and calcium salts. In addition to these, known auxiliary complexing agents, buffers, smoothing agents, stress relaxation agents, brighteners, semi-brighteners, antioxidants, ultraviolet absorbers, etc. may be blended according to the intended purpose. These additives may be added during the second mixing in the production of a resin emulsion or may be added during the production of a pigment dispersion paste or may be added during or after the mixing a resin emulsion and a pigment dispersion paste.

The cationic electrodeposition coating composition of the present invention may contain other coating film-forming resin components in addition to the amine-modified epoxy resin (A). Examples of such other film-forming resin components include acrylic resins, polyester resins, urethane resins, butadiene resins, phenol resins, and xylene resins. As such other coating film-forming resin components that may be contained in the electrodeposition coating composition, phenol resins and xylene resins are preferable. Examples of the phenol resins and the xylene resins include xylene resins having 2 to 10 aromatic rings.

In the present invention, the deposited electrodeposition coating film of the cationic electrodeposition coating composition may preferably have a coating film viscosity of 10 Pa·s or less at 105°C. For a deposited electrodeposition coating film, the temperature of 105°C can be regarded as a temperature that the electrodeposition coating film has just before the onset of the curing reaction of the coating film resin component contained in the film. The condition that the coating film viscosity of an electrodeposition coating film at 105°C under such temperature conditions is 10 Pa·s or less makes it possible to secure flow of the electrodeposition coating film by heating even though a component (D) having a high molecular weight is contained, and it is possible to avoid a cured electrodeposition coating film from being uneven in film thickness. The lower limit of the coating film viscosity at 105°C is not particularly limited, but it may preferably be 1 Pa·s, more preferably 5 Pa·s, for example.

The coating film viscosity at 105°C can be measured in accordance with JIS K7244, for example. JIS K7244 is a Japanese Industrial Standard corresponding to ISO 6721. Specifically, the coating film viscosity of a deposited electrodeposition coating film at 105°C can be measured by the following procedure. An electrodeposition coating film is formed first by performing electrodeposition coating for 180 seconds on an object to be coated such that the resulting film comes to have a thickness of about 15 µm, and then the film is washed with water to remove an electrodeposition coating composition that has excessively adhered. Subsequently, excessive moisture adhered to the surface of the electrodeposition coating film is removed, and then the coating film is immediately taken out without drying, and thus a sample is prepared. By subjecting the thus-obtained sample to viscosity measurement by using a dynamic viscoelasticity measuring device, the coating film viscosity at 105°C can be measured.

In the present invention, a deposited electrodeposition coating film of the cationic electrodeposition coating composition may preferably have a static viscosity at 105°C of 200 to 5000 Pa·s, and more preferably 1000 to 5000 Pa·s. Here, the static viscosity at 105°C can be determined by measuring a shear viscosity after 300 seconds at 105°C while setting a shear rate to d(gamma)/dt = 0.011/sec. The measurement of the static viscosity at 105°C can be measured in accordance with JIS 7244, for example. JIS 7244 is a Japanese Industrial Standard corresponding to ISO 6721.

The condition that the deposited electrodeposition coating film has a static viscosity at 105°C of 200 to 5000 Pa·s affords an advantage that superior edge part rust prevention property can be obtained. This is considered to be because the electrodeposited coating film deposited at the edge part and the deposited Group-3 element compound (C) can be retained in the step of heating and curing the electrodeposition coating film deposited on the object to be coated.

In the present invention, the cationic electrodeposition coating composition may preferably have a coating material viscosity of 10 mPa·s or less at 23°C. When the coating material viscosity of a cationic electrodeposition coating composition is within the above range, the cationic electrodeposition coating composition is understood to have a viscosity almost equal as compared with cationic electrodeposition coating compositions conventional in this technical field even when the cationic electrodeposition coating composition contains the cationic or nonionic resin (D) described above. Therefore, it can be understood with the cationic electrodeposition coating composition of the present invention that a superior rust prevention property can be attained not by controlling the condition of the deposition of a cured electrodeposition coating film merely by increasing the coating material viscosity of the electrodeposition coating composition, but by considering the role of each of the components contained in the electrodeposition coating composition and controlling the behavior of the respective components.

The coating material viscosity of a cationic electrodeposition coating composition at 23°C can be measured in accordance with JIS K5601 and JIS K7117-1 using a B-type viscometer (manufactured by TOKIMEC INC., for example). JIS K7117-1 is a Japanese Industrial Standard corresponding to ISO 2555.

The lower limit of the coating material viscosity at 23°C of the cationic electrodeposition coating composition is not particularly limited, but it may preferably be 1 mPa·s, more preferably 3 mPa·s, for example.

### Electrodeposition coating and formation of electrodeposition coating film

By subjecting an object to be coated to electrodeposition coating using the cationic electrodeposition coating composition of the present invention, an electrodeposition coating film can be formed. In electrodeposition coating using the cationic electrodeposition coating composition of the present invention, an object to be coated is used as a cathode, and a voltage is applied between the cathode and an anode. As a result, an electrodeposition coating film is deposited on the object to be coated.

As an object to be coated with the cationic electrodeposition coating composition of the present invention, it is possible to use various materials which can be fed with electricity. Examples of the usable object to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets and tin-based plated steel sheets.

In an electrodeposition coating step, electrodeposition coating is performed by immersing an object to be coated in an electrodeposition coating composition, and then applying a voltage of 50 to 450 V. When the applied voltage is less than 50 V, electrodeposition may be insufficient, and when the applied voltage is more than 450 V, the coating film appearance may be poor. During electrodeposition coating, the bath liquid temperature of the coating composition is usually adjusted to 10 to 45°C.

The time for which the voltage is applied varies depending on electrodeposition conditions, and it may be generally 2 to 5 minutes.

In the electrodeposition coating using the cationic electrodeposition coating composition of the present invention, the thickness of the electrodeposition coating film to be deposited may preferably be such that a thickness of the electrodeposition coating film finally obtained by heating and curing may preferably be 5 to 60 µm, more preferably 10 to 50 µm. If an electrodeposition coating film has a film thickness of less than 5 µm, the rust prevention property of the film may be insufficient.

The electrodeposition coating film deposited as described above can be cured by optionally washing it with water, and then heating it at, for example, 120 to 260°C, preferably 140 to 220°C, for 10 to 30 minutes. A cured electrodeposition coating film is thereby formed.

Use of the cationic electrodeposition coating composition of the present invention affords an advantage that a cured electrodeposition coating film superior in edge part rust prevention property can be formed even when a cured electrodeposition coating film having a large film thickness, e.g., a film thickness of 25 to 50 µm is formed on an object to be coated having an edge part. The cationic electrodeposition coating composition of the present invention has a function of forcing an electrodeposition coating film and a deposited Group-3 element compound (C) to stay, and therefore, it can be used suitably in the case of forming a cured electrodeposition coating film having a large film thickness, for example, a thickness of 25 to 50 µm.

In the present description, evaluation of the corrosion resistance of a cured electrodeposition coating film formed on an object to be coated having an edge part is perform by a salt water spray test (35°C × 168 hours) according to JIS Z2371 (2000). For example, when a cured electrodeposition coating film having a large film thickness, e.g., a film thickness of 25 to 50 µm is subjected to a salt water spray test and the number of rust colonies formed at an edge coated part of the cured electrodeposition coating film formed on an object to be coated having an edge part is less than 5 colonies/cm² per 1 cm² of an edge part, the coating film is a coating film superior in corrosion resistance (rust prevention property) of the edge part. JIS Z2371 (2000) is a Japanese Industrial Standard corresponding to ISO 9227.

### EXAMPLES

The present invention will be described hereafter in more detail by way of examples, to which the present invention is not intended to be limited. In the following examples, all designations of "part(s)" and "%" are on the mass basis, unless otherwise stated.

### Production Example 1: Production of pigment dispersion resin

### Preparation of 2-ethylhexanol half-blocked isophorone diisocyanate

222.0 parts of isophorone diisocyanate (hereinafter, abbreviated as IPDI) was added in a reaction vessel equipped with a stirrer, a condenser tube, a nitrogen inlet tube and a thermometer, and was diluted with 39.1 parts of methyl isobutyl ketone (MIBK), and 0.2 parts of dibutyltin dilaurate was added thereto. Thereafter, the mixture was heated to 50°C, and 131.5 parts of 2-ethylhexanol was then added dropwise under stirring in a dry nitrogen atmosphere over 2 hours, affording 2-ethylhexanol half-blocked IPDI (solid content: 90.0% by mass).

### Preparation of quaternization agent

87.2 parts of dimethylethanolamine, 117.6 parts of a 75% lactic acid aqueous solution and 39.2 parts of ethylene glycol mono-n-butyl ether were sequentially added in a reaction vessel, and stirred at 65°C for 30 minutes, and thus a quaternization agent was prepared.

### Production of pigment dispersion resin

710.0 parts of a bisphenol A-type epoxy resin (trade name: DER-331 J, produced by The Dow Chemical Company) and 289.6 parts of bisphenol A were added in a reaction vessel, reacted in a nitrogen atmosphere at 150 to 160°C for 1 hour, and then cooled to 120°C, and 498.8 parts of the previously prepared 2-ethylhexanol half-blocked IPDI (MIBK solution) was then added. The reaction mixture was stirred at 110 to 120°C for 1 hour, 463.4 parts of ethylene glycol mono-n-butyl ether was added, the mixture was cooled to 85 to 95°C, and 196.7 parts of the previously prepared quaternization agent was added. The reaction mixture was held at 85 to 95°C until the acid value was 1, and 964 parts of deionized water was then added, affording a desired pigment dispersion resin (solid content: 50% by mass).

### Production Example 2: Production of amine-modified epoxy resin (A)

92 parts of methyl isobutyl ketone, 940 parts of a bisphenol A-type epoxy resin (trade name: DER-331J, produced by The Dow Chemical Company), 382 parts of bisphenol A, 63 parts of octylic acid and 2 parts of dimethylbenzylamine were added, and reacted until the epoxy equivalent was 1110 g/eq while the inside of a reaction vessel was held at a temperature of 140°C, and cooling was then performed until the temperature of the inside of the reaction vessel was 120°C. A mixture of 78 parts of diethylenetriamine diketimine (methyl isobutyl ketone solution having a solid content of 73% by mass) and 92 parts of diethanolamine was then added, and reacted at 120°C for 1 hour, affording an aminated resin (cation-modified epoxy resin). The resin had a number-average molecular weight of 2,560, an amine value of 50 mg KOH/g (including an amine value derived from the primary amine of 14 mg KOH/g), and a hydroxyl value of 240 mg KOH/g.

### Production Example 3-1: Production of blocked isocyanate curing agent (B-1)

1680 parts of hexamethylene diisocyanate (HDI) and 732 parts of MIBK were added in a reaction vessel, and heated to 60°C. A solution of 346 parts of trimethylolpropane in 1067 parts of MEK oxime was added thereto dropwise at 60°C over 2 hours. Further, the mixture was heated at 75°C for 4 hours, disappearance of an absorption based on an isocyanate group was then confirmed in IR spectrum measurement. The mixture was allowed to cool, and 27 parts of MIBK was then added, affording a blocked isocyanate curing agent (B-1) having a solid content of 78%. The isocyanate group value was 252 mg KOH/g.

### Production Example 3-2: Production of blocked isocyanate curing agent (B-2)

1340 parts of 4,4'-diphenylmethane diisocyanate and 277 parts of MIBK were added in a reaction vessel, and heated to 80°C, and a solution of 226 parts of ε-caprolactam in 944 parts of butyl cellosolve was then added dropwise at 80°C over 2 hours. Further, the mixture was heated at 100°C for 4 hours, disappearance of an absorption based on an isocyanate group was then confirmed in IR spectrum measurement, the mixture was allowed to cool, and 349 parts of MIBK was then added, affording a blocked isocyanate curing agent (B-2) (solid content: 80% by mass). The isocyanate group value was 251 mg KOH/g.

### Production Example 4: Production of amine-modified epoxy resin emulsion

350 parts (solid content) of the amine-modified epoxy resin (A) obtained in Production Example 2 was mixed with 75 parts (solid content) of the blocked isocyanate curing agent (B-1) obtained in Production Example 3-1 and 75 parts (solid content) of the blocked isocyanate curing agent (B-2) obtained in Production Example 3-2. Next, ethylene glycol mono-2-ethylhexyl ether was added thereto in an amount of 3% (15 parts) based on the solid content. Then, the mixture was neutralized by adding formic acid in such a manner that the addition amount corresponded to a resin neutralization ratio of 40%, the mixture was slowly diluted by adding ion-exchanged water, and methyl isobutyl ketone was then removed under a reduced pressure so that the solid content was 40%, thereby affording an aminated resin emulsion.

### Production Example 5: Production of high molecular weight amine-modified epoxy resin (molecular weight: 20,000)

139 parts of methyl isobutyl ketone, 940 parts of a bisphenol A-type epoxy resin (trade name: DER-331 J, produced by The Dow Chemical Company), 444 parts of bisphenol A, and 2 parts of dimethylbenzylamine were added, and reacted until the epoxy equivalent was 1340 g/eq while the inside of a reaction vessel was held at a temperature of 140°C, and cooling was then performed until the temperature of the inside of the reaction vessel was 120°C.

A mixture of 79 parts of diethylenetriamine diketimine (methyl isobutyl ketone solution having a solid content of 73% by mass) and 53 parts of N-methylethanolamine (MMA) was then added, and reacted at 120°C for 1 hour, affording an aminated resin (cation-modified epoxy resin).

After cooling to 90°C, the mixture was neutralized and the solid content was adjusted to 20% by adding ion-exchanged water and acetic acid in such a manner that the addition amount corresponded to a resin neutralization ratio of 80%.

Thereafter, 188 parts of a bisphenol A-type epoxy resin (trade name: DER-331J, produced by The Dow Chemical Company) was added and reacted at 60°C for 3 hours. Methyl isobutyl ketone was removed under reduced pressure, affording a high molecular weight amine-modified epoxy resin (molecular weight: 20,000) with a solid content of 20%.

The molecular weight of the high molecular weight amine-modified epoxy resin is a number-average molecular weight. The molecular weight (number-average molecular weight) of the high molecular weight amine-modified epoxy resin was measured by the following procedure.

Water was removed from the resulting high molecular weight amine-modified epoxy resin by vacuum drying or the like, and then measurement was carried out under the following conditions by gel permeation chromatography (GPC) using polystyrene standard samples.
Apparatus: alliance 2695 Separations Module
Column: Tosoh TSK gel ALPHA-M
Flow rate: 0.05 ml/min
Detector: alliance 2414 Refractive Index Detector
Mobile phase: N,N'-dimethylformamide
Standard samples: TSK STANDARD POLYSTYRENE (produced by Tosoh Corporation), A-500, A-2500, F-1, F-4, F-20, F-80, F-700, 1-phenylhexane (produced by Aldrich)

### Production Example 6: Production of high molecular weight amine-modified epoxy resin (molecular weight: 1,000,000)

139 parts of methyl isobutyl ketone, 940 parts of a bisphenol A-type epoxy resin (trade name: DER-331 J, produced by The Dow Chemical Company), 444 parts of bisphenol A, and 2 parts of dimethylbenzylamine were added, and reacted until the epoxy equivalent was 1340 g/eq while the inside of a reaction vessel was held at a temperature of 140°C, and cooling was then performed until the temperature of the inside of the reaction vessel was 120°C.

A mixture of 79 parts of diethylenetriamine diketimine (methyl isobutyl ketone solution having a solid content of 73% by mass) and 53 parts of N-methylethanolamine (MMA) was then added, and reacted at 120°C for 1 hour, affording an aminated resin (cation-modified epoxy resin).

After cooling to 90°C, the mixture was neutralized and the solid content was adjusted to 20% by adding ion-exchanged water and acetic acid in such a manner that the addition amount corresponded to a resin neutralization ratio of 80%.

Thereafter, 188 parts of a bisphenol A-type epoxy resin (trade name: DER-331J, produced by The Dow Chemical Company) was added and reacted at 90°C for 3 hours. Methyl isobutyl ketone was removed under reduced pressure, affording a high molecular weight amine-modified epoxy resin (molecular weight: 1,000,000) with a solid content of 20%.

### Comparative Production Example 1: Production of high molecular weight amine-modified epoxy resin (molecular weight: 6000)

139 parts of methyl isobutyl ketone, 940 parts of a bisphenol A-type epoxy resin (trade name: DER-331 J, produced by The Dow Chemical Company), 444 parts of bisphenol A, and 2 parts of dimethylbenzylamine were added, and reacted until the epoxy equivalent was 1340 g/eq while the inside of a reaction vessel was held at a temperature of 140°C, and cooling was then performed until the temperature of the inside of the reaction vessel was 120°C.

A mixture of 79 parts of diethylenetriamine diketimine (methyl isobutyl ketone solution having a solid content of 73% by mass) and 53 parts of N-methylethanolamine (MMA) was then added, and reacted at 120°C for 1 hour, affording an aminated resin (cation-modified epoxy resin).

After cooling to 90°C, the mixture was neutralized and the solid content was adjusted to 20% by adding ion-exchanged water and acetic acid in such a manner that the addition amount corresponded to a resin neutralization ratio of 80%.

Thereafter, 188 parts of a bisphenol A-type epoxy resin (trade name: DER-331J, produced by The Dow Chemical Company) was added and reacted at 50°C for 2 hours. Methyl isobutyl ketone was removed under reduced pressure, affording a high molecular weight amine-modified epoxy resin (molecular weight: 6000) with a solid content of 20%.

### Example 1

### Preparation of cationic electrodeposition coating composition

60.0 parts by mass of the pigment dispersion resin (solid content: 50% by mass) obtained in Production Example 1 and 100 parts of lanthanum oxide were added to 116.6 parts of ion-exchanged water, followed by stirring at 40°C and 2000 rpm for 1 hour by using a sand mill, and thus a lanthanum oxide paste was obtained. The resulting lanthanum oxide paste had a solid concentration of 47% by mass.

In another container, 5.1 parts of a 50% aqueous lactic acid solution and 6.5 parts of bismuth oxide were stirred and mixed with 110.1 parts of ion-exchanged water. To this was added 56.7 parts by mass of the pigment dispersion resin obtained in Production Example 1, followed by stirring at room temperature and 1000 rpm for 1 hour. Then, 7.1 parts of the amine-modified epoxy resin emulsion obtained in Production Example 4 and 1.4 parts of a 10% aqueous tartaric acid solution were added and stirred, and then 8 parts of carbon black and 86.6 parts of Satintone (calcined kaolin) as a pigment were added. Next, 15.3 parts of the obtained lanthanum oxide paste was added thereto, followed by stirring at 40°C and 2000 rpm for 1 hour by using a sand mill, and thus a pigment paste having a solid concentration of 47% by mass was obtained.

0.5 parts of ACCOFLOC N100S (nonionic polyacrylamide resin, produced by MT AquaPolymer, Inc., number-average molecular weight: about 13,000,000) as component (D) was added to 99.5 parts of ion-exchanged water, followed by stirring at room temperature for 60 minutes, and thus a preparation liquid containing a polyacrylamide resin was obtained.

Subsequently, F2 emulsion was prepared by adding 6 parts of the above-prepared preparation liquid (solid content: 0.5%) to 250 parts of the amine-modified epoxy resin emulsion of Production Example 4 (solid content 40%). In the following stability evaluation, stability was separately evaluated using the resulting F2 emulsion.

In a stainless steel container, 1997 parts of ion-exchanged water, 1539 parts of the F2 emulsion, and 464 parts of the pigment paste prepared above were aged at 40°C for 16 hours, and thus a cationic electrodeposition coating composition was prepared.

### Formation of cured electrodeposition coating film (1) (cold-rolled steel sheet, thickness: 20 µm)

A cold-rolled steel sheet (JIS G 3141, SPCC-SD) was immersed in SURFCLEANER EC90 (produced by Nippon Paint Co., Ltd.) at 50°C for 2 minutes, thereby being degreased. Next, the steel sheet was immersed in SURFFINE GL1 (produced by Nippon Paint Co., Ltd.) at room temperature for 30 seconds, and immersed in SURFDYNE EC3200 (produced by Nippon Paint Surfchemicals, Zirconium conversion agent) at 35°C for 2 minutes. The steel sheet was then rinsed with deionized water.

To the cationic electrodeposition coating composition obtained above, a required amount of 2-ethylhexyl glycol was added such that the electrodeposition coating film had a thickness of 20 µm after curing.

Thereafter, the steel sheet was fully embedded in the electrodeposition coating composition, and application of a voltage was then immediately started. The voltage was applied under such a condition that the voltage was raised for 30 seconds to 180 V, and the steel sheet was held for 150 seconds. Thus, an uncured electrodeposition coating film was deposited on the object to be coated (cold-rolled steel sheet). The resulting uncured electrodeposition coating film was heated and cured at 160°C for 15 minutes, affording an electrodeposition coated sheet having a cured electrodeposition coating film having a thickness of 20 µm.

### Formation of cured electrodeposition coating film (2) (object to be coated having an edge part, film thickness: 20 µm)

Degreasing treatment, surface treatment, and chemical conversion were performed in the same procedures as described above, except that the object to be coated was changed from a cold-rolled steel sheet (JIS G3141, SPCC-SD) to an L-type exclusive spare blade (LB10K: manufactured by OLFA Corporation, length: 100 mm, width: 18 mm, thickness: 0.5 mm).

Subsequently, a cured electrodeposition coating film was provided in the same procedure as in the formation of the cured electrodeposition coating film (1) and thus a cured electrodeposition coating film having a thickness of 20 µm was provided on the object to be coated having an edge part.

### Formation of cured electrodeposition coating film (3) (object to be coated having an edge part, film thickness: 40 µm)

A cured electrodeposition coating film having a film thickness of 40 µm was provided through temperature adjustment on an L-type exclusive spare blade that was an object to be coated having an edge part in the same procedure as for the cured electrodeposition coating film (2) except that the application condition in the electrodeposition coating was changed to a condition that the voltage was raised to 280 V over 30 seconds and this voltage was held for 270 seconds.

### Example 2

A cationic electrodeposition coating composition was obtained in the same manner as in Example 1 except that as Component (D), 4 parts of the preparation liquid containing a component (D) prepared using ARONFLOC C535H (cationic polyacrylamide resin, produced by MT AquaPolymer, Inc., number-average molecular weight: about 8,000,000) was used.

Using the cationic electrodeposition coating composition obtained, cured electrodeposition coating films (1) to (3) were formed in the same manner as in Example 1.

### Example 3

A cationic electrodeposition coating composition was obtained in the same manner as in Example 1 except that as Component (D), 4 parts of the preparation liquid containing a component (D) prepared using ARONFLOC C508 (strongly cationic polyacrylamide resin, produced by MT AquaPolymer, Inc., number-average molecular weight: about 8,000,000) was used.

Using the cationic electrodeposition coating composition obtained, cured electrodeposition coating films (1) to (3) were formed in the same manner as in Example 1.

### Example 4

A cationic electrodeposition coating composition was obtained in the same manner as in Example 1 except that as Component (D), 6 parts of the preparation liquid containing a component (D) prepared using ARONFLOC C508LL (strongly cationic polyacrylamide resin, produced by MT AquaPolymer, Inc., number-average molecular weight: about 3,000,000) was used.

Using the cationic electrodeposition coating composition obtained, cured electrodeposition coating films (1) to (3) were formed in the same manner as in Example 1.

### Example 5

A mixture prepared by adding 50 parts of the high molecular weight amine-modified epoxy resin (molecular weight: about 20,000) prepared in Production Example 5 above to 225 parts of the amine-modified epoxy resin emulsion (solid content: 40%) of Production Example 4 was regarded as F2 emulsion.

In a stainless steel container, 1938 parts of ion-exchanged water, 1598 parts of the F2 emulsion, and 464 parts of the pigment paste prepared above were aged at 40° C for 16 hours, and thus a cationic electrodeposition coating composition was prepared.

Using the cationic electrodeposition coating composition obtained, cured electrodeposition coating films (1) to (3) were formed in the same manner as in Example 1.

### Example 6

A cationic electrodeposition coating composition was obtained in the same manner as in Example 5 except that the high molecular weight amine-modified epoxy resin (molecular weight: about 1,000,000) produced in Production Example 6 was used as Component (D).

Using the cationic electrodeposition coating composition obtained, cured electrodeposition coating films (1) to (3) were formed in the same manner as in Example 1.

### Example 7

A cationic electrodeposition coating composition was obtained in the same manner as in Example 5 except for forming an F2 emulsion by mixing 10 parts of DAICHITOSAN H (produced by Dainichiseika Color & Chemicals Mfg. Co., Ltd.) as Component (D) having been diluted to 1% and 250 parts of the amine-modified epoxy resin emulsion (solid content: 40%) of Production Example 4.

Using the cationic electrodeposition coating composition obtained, cured electrodeposition coating films (1) to (3) were formed in the same manner as in Example 1.

### Example 8

### Preparation of cationic electrodeposition coating composition

In order to form a dispersion paste with a solid concentration of 47% by mass, 5.3 parts of a 50% aqueous lactic acid solution and 6.9 parts of bismuth oxide were added to 107.4 parts of ion-exchanged water, and stirred at room temperature for 1 hour. In addition, 9.0 parts of a 50% aqueous lactic acid solution and 5.5 parts of lanthanum oxide were added thereto, followed by stirring and mixing at room temperature for 1 hour. 60 parts (in terms of a resin solid content) of the pigment dispersion resin obtained in Production Example 1 was added thereto, followed by stirring at 1000 rpm at room temperature for 1 hour.

Then, 1.5 parts of a 10% aqueous tartaric acid solution was added, and subsequently, 7.5 parts (in terms of a resin solid content) of the amine-modified epoxy resin emulsion obtained in Production Example 4 was added and mixed, and further 8 parts of carbon black and 86.6 parts of Satintone (calcined kaolin) as a pigment were added, followed by stirring with a sand mill at 2000 rpm at 40°C for 1 hour, and thus a pigment dispersion paste was obtained.

0.5 part of ARONFLOC C508 (strongly cationic polyacrylamide resin, produced by MT AquaPolymer, Inc., number-average molecular weight: about 8,000,000) as component (D) was added to 99.5 parts of ion-exchanged water, followed by stirring at room temperature for 60 minutes, and thus a preparation liquid containing a polyacrylamide resin was obtained.

Subsequently, a mixture prepared by adding 4 parts of the preparation liquid prepared above to 250 parts of the amine-modified epoxy resin emulsion (solid content: 40%) of Production Example 4 was regarded as F2 emulsion. In the following stability evaluation, stability was separately evaluated using the resulting F2 emulsion.

In a stainless steel container, 1997 parts of ion-exchanged water, 1539 parts of the F2 emulsion, and 464 parts of the pigment paste prepared above were mixed and aged at 40°C for 16 hours, and thus a cationic electrodeposition coating composition was prepared.

Using the thus-obtained cationic electrodeposition coating composition, cured electrodeposition coating films (1) to (3) were formed in the same manner as in Example 1.

### Example 9

A pigment paste containing dibutyltin oxide and having a solid concentration of 47% by mass was obtained in the same manner as in Example 1 except that 8.3 parts of dibutyltin oxide was added instead of 5.1 parts of a 50% aqueous lactic acid solution and 6.5 parts of bismuth oxide.

A cationic electrodeposition coating composition was obtained in the same manner as in Example 1 except for using the pigment paste thus obtained and using 4 parts of a preparation liquid as a component (D) prepared by using ARONFLOC C508 (strongly cationic polyacrylamide resin, produced by MT AquaPolymer, Inc., number-average molecular weight: about 8,000,000) as a component (D).

Using the thus-obtained cationic electrodeposition coating composition, cured electrodeposition coating films (1) to (3) were formed in the same manner as in Example 1.

### Example 10

Cured electrodeposition coating films (1) to (3) were formed in the same manner as in Example 3 except that SURFDINE SD-5000 (produced by Nippon Paint Co., Ltd., zinc phosphate chemical conversion treatment solution), which is a zinc phosphate chemical conversion treatment solution, was used as a chemical conversion treatment agent instead of SURFDINE EC3200 (produced by Nippon Paint Surf Chemicals Co., Ltd., zirconium chemical conversion treatment agent).

### Example 11

60.0 parts by mass of the pigment dispersion resin (solid content: 50% by mass) obtained in Production Example 1 and 100 parts of neodymium oxide were added to 116.6 parts of ion-exchanged water, followed by stirring and mixing, and further stirring at 40°C and 2000 rpm for 1 hour by using a sand mill, and thus a neodymium oxide paste was obtained. The resulting neodymium oxide paste had a solid concentration of 47% by mass.

In another container, 5.1 parts of a 50% aqueous lactic acid solution and 6.5 parts of bismuth oxide were stirred and mixed with 110.1 parts of ion-exchanged water. To this was added 56.7 parts by mass of the pigment dispersion resin obtained in Production Example 1, followed by stirring at room temperature and 1000 rpm for 1 hour. Then, 7.1 parts of the amine-modified epoxy resin emulsion obtained in Production Example 4 and 1.4 parts of a 10% aqueous tartaric acid solution were added and stirred, and then 8 parts of carbon black and 86.6 parts of Satintone (calcined kaolin) as a pigment were added, and subsequently, 15.3 parts of the obtained neodymium oxide paste was added, followed by stirring at 40°C and 2000 rpm for 1 hour by using a sand mill, and thus a pigment paste having a solid concentration of 47% by mass was obtained.

A cationic electrodeposition coating composition was obtained in the same manner as in Example 1 except for using the pigment paste thus obtained and using 4 parts of a preparation liquid as a component (D) prepared by using ACCOFLOC C508 (produced by MT AquaPolymer, Inc., number-average molecular weight: about 8,000,000) as a component (D).
Using the thus-obtained cationic electrodeposition coating composition, cured electrodeposition coating films (1) to (3) were formed in the same manner as in Example 1.

### Comparative Example 1

### Preparation of cationic electrodeposition coating composition

In a container, 5.1 parts of a 50% aqueous lactic acid solution and 6.5 parts of bismuth oxide were stirred and mixed with 110.1 parts of ion-exchanged water. Then, 7.1 parts of the amine-modified epoxy resin emulsion obtained in Production Example 4 and 1.4 parts of a 10% aqueous tartaric acid solution were added and stirred, and then 8 parts of carbon black, which is a pigment, and 86.6 parts of Satintone (calcined kaolin) were added, followed by stirring at 40°C and 2000 rpm for 1 hour by using a sand mill, and thus a pigment paste containing bismuth oxide and having a solid concentration of 47% by mass was obtained.

In a stainless steel container, 2082 parts of ion-exchanged water, 1454 parts of an amine-modified epoxy resin emulsion (regarded as an F2 emulsion), and 464 parts of the pigment dispersion paste obtained above were added and then aged at 40°C for 16 hours, and thus a cationic electrodeposition coating composition was formed.

Using the thus-obtained cationic electrodeposition coating composition, cured electrodeposition coating films (1) to (3) were formed in the same manner as in Example 1.

### Comparative Example 2

### Preparation of cationic electrodeposition coating composition

A mixture prepared by adding 50 parts of the high molecular weight amine-modified epoxy resin (molecular weight: 20,000) prepared in Production Example 5 above to 225 parts of the amine-modified epoxy resin emulsion (solid content: 40%) of Production Example 4 was regarded as F2 emulsion.

In a stainless steel container, 1938 parts of ion-exchanged water, 1598 parts of the F2 emulsion, and 464 parts of the pigment paste prepared in Comparative Example 1 were aged at 40° C for 16 hours, and thus a cationic electrodeposition coating composition was prepared.

Using the thus-obtained cationic electrodeposition coating composition, cured electrodeposition coating films (1) to (3) were formed in the same manner as in Example 1.

### Comparative Example 3

A cationic electrodeposition coating composition was obtained in the same manner as in Comparative Example 2 except F2 emulsion was prepared using 33 parts of microgel (molecular weight: about 1,000,000 or more, PZW-1010, produced by Nippon Paint Co., Ltd., solid content 30%) and 17 parts of ionic water instead of the high molecular weight amine-modified epoxy resin.

Using the thus-obtained cationic electrodeposition coating composition, cured electrodeposition coating films (1) to (3) were formed in the same manner as in Example 1.

### Comparative Example 4

A pigment paste was prepared by adding zinc acetate (reagent) to the pigment paste prepared in Comparative Example 1 such that a zinc concentration would be 0.075%.

A cationic electrodeposition coating composition was formed in the same manner as in Comparative Example 2 except that the pigment paste obtained above was used.

Using the thus-obtained cationic electrodeposition coating composition, cured electrodeposition coating films (1) to (3) were formed in the same manner as in Example 1.

### Comparative Example 5

A pigment paste was prepared by adding fluorotitanic acid (reagent) to the pigment paste prepared in Comparative Example 1 such that a titanium concentration would be 0.05%.

A cationic electrodeposition coating composition was formed in the same manner as in Comparative Example 2 except that the pigment paste obtained above was used.

Using the thus-obtained cationic electrodeposition coating composition, cured electrodeposition coating films (1) to (3) were formed in the same manner as in Example 1.

### Comparative Example 6

A pigment paste was prepared by adding fluorozirconic acid (reagent) to the pigment paste prepared in Comparative Example 1 such that a zircon concentration would be 0.05%.

A cationic electrodeposition coating composition was formed in the same manner as in Comparative Example 2 except that the pigment paste obtained above was used.

Using the thus-obtained cationic electrodeposition coating composition, cured electrodeposition coating films (1) to (3) were formed in the same manner as in Example 1.

### Reference Example 1

A cationic electrodeposition coating composition was prepared in the same manner as in Example 1 except that no component (D) was used.

Using the cationic electrodeposition coating composition obtained, cured electrodeposition coating films (1) to (3) were formed in the same manner as in Example 1.

### Reference Example 2

A cationic electrodeposition coating composition was obtained in the same manner as in Example 5 except that the amine-modified epoxy resin (molecular weight: 6000) prepared in Comparative Preparation Example 1 was used instead of the component (D).

Using the cationic electrodeposition coating composition obtained, cured electrodeposition coating films (1) to (3) were formed in the same manner as in Example 1.

Using the cationic electrodeposition coating composition and the cured electrodeposition coating film obtained in each of the examples and comparative examples described above, the following evaluations were carried out. The results of the evaluations are shown in the following tables.

### Measurement of coating material viscosity at 23°C of electrodeposition coating composition

The coating material viscosity at 23°C of a cationic electrodeposition coating composition was measured at 60 rpm in accordance with JIS K5601 and JIS K7117-1 using a B-type viscometer (manufactured by TOKIMEC INC.).

### Measurement of coating film viscosity at 105°C of deposited electrodeposition coating film

An object to be coated (cold-rolled steel sheet) was immersed in a cationic electrodeposition coating composition and electrodeposition coating was carried out for 180 seconds such that a coating film having a thickness of about 15 µm would be formed, and thus an uncured electrodeposition coating film was formed. This was washed with water and the excessively adhering electrodeposition coating composition was removed.

Subsequently, after removing the water excessively adhering to a surface of the electrodeposition coating film, the coating film was immediately taken out without drying, and a sample for measurement was prepared. The sample thus obtained was subjected to measurement of a coating film viscosity at 105°C by measuring a viscosity at a basic frequency of 1 Hz and a strain control of 0.5 deg using a dynamic viscoelasticity measuring device (trade name: Rheosol-G3000, manufactured by UBM Co., Ltd.).

### Measurement of static viscosity at 105°C of deposited electrodeposition coating film

An object to be coated (tin plate) was immersed in a cationic electrodeposition coating composition and electrodeposition coating was carried out for 180 seconds such that a coating film having a thickness of about 15 µm would be formed, and thus an uncured electrodeposition coating film was formed. This was washed with water and the excessively adhering electrodeposition coating composition was removed. Subsequently, after removing the water excessively adhering to a surface of the electrodeposition coating film, the coating film was immediately taken out without drying, and a sample for measurement was prepared. The sample thus obtained was subjected to measurement of a static viscosity at 105°C by measuring a shear viscosity at 105°C after 300 seconds while setting a shear rate to d(gamma)/dt = 0.011/second using a dynamic viscoelasticity measuring device (trade name: MCR302, manufactured by Anton Paar GmbH).

### Edge corrosion test (film thickness 20 µm, 40 µm)

The L-type exclusive spare blade having a 20 µm or 40 µm-thick cured electrodeposition coating film formed in each of the examples and the comparative examples was used as a test piece.

The test piece was subjected to a salt water spray test (35°C × 168 hours) in accordance with JIS Z2371 (2000), and the number of rust colonies formed at a tip of the L-type exclusive spare blade was examined.

In this test, "a tip of an L-type exclusive spare blade" means a width of 5 mm from the top of the blade along the blade body direction. The width includes both the front surface side and the back surface side, and the front and back surfaces have a width of 10 mm in total. The "tip of an L-type exclusive spare blade" corresponds to the "edge part" referred to herein.

For example, in the following evaluation, when the number of rust colonies formed at the tip of the L-type exclusive spare blade is 30, since the length of the L-type exclusive spare blade is 100 mm (10 cm), the width of the tip of the L-type exclusive spare blade is 10 mm in total (1 cm in width) on the front and back surfaces, the number of rust colonies per 1 cm² of the tip of the L-type exclusive blade is, 30 colonies/10 cm² = 3 colonies/cm².

### Evaluation criteria

⊙: No rust was formed.
○: Less than 10 rust colonies.
(In terms of the number of rust colonies per 1 cm² of a tip of an L-type exclusive spare blade, less than 1 colony/cm².)
○Δ: 10 or more rust colonies and less than 30 rust colonies,
(In terms of the number of rust colonies per 1 cm² of a tip of an L-type exclusive spare blade, 1 or more colonies/cm² and less than 3 colonies/cm².)
Δ: 30 or more rust colonies and less than 50 rust colonies.
(In terms of the number of rust colonies per 1 cm² of a tip of an L-type exclusive spare blade, 3 or more colonies/cm² and less than 5 colonies/cm².)
Δ×: 50 or more rust colonies and less than 100 rust colonies.
(In terms of the number of rust colonies per 1 cm² of a tip of an L-type exclusive spare blade, 5 or more colonies/cm² and less than 10 colonies/cm².)
×: 100 or more rust colonies.
(In terms of the number of rust colonies per 1 cm² of a tip of an L-type exclusive spare blade, 10 or more colonies/cm².)

### Evaluation of appearance of cured electrodeposition coating film (Ra, smoothness)

The surface roughness of the obtained cured electrodeposition coating film was found by measuring the arithmetic average roughness (Ra) of a roughness curve according to JIS B0601 by using an Evaluation type Surface Roughness Measurement Instrument (SURFTEST SJ-201P, manufactured by Mitutoyo Co., Ltd.). A sample with 2.5-mm-width cut-off (number of partitions: 5) was subjected to measurement seven times to give Ra values in terms of top/bottom-trimmed mean. It may be said that a smaller Ra value leads to less surface irregularities and a better coating film appearance. JIS B0601 is a Japanese Industrial Standard corresponding to ISO 4287.

### Appearance evaluation (color unevenness)

The cationic electrodeposition coating composition obtained in each of examples and comparative examples was stirred at 1000 rpm, stirring was then stopped, the steel sheet was fully embedded horizontally, held for 3 minutes, and application of a voltage was started. A voltage was applied under such a condition that the voltage was raised for 30 seconds to 180 V, and the steel sheet was held for 150 seconds. Thus, an uncured electrodeposition film was deposited on the object to be coated (cold-rolled steel sheet). The resulting uncured electrodeposition film was heated and cured at 160°C for 15 minutes, so that an electrodeposition coated sheet having an electrodeposition coating film was obtained. For the electrodeposition coated sheet, presence/absence of defects in the coating film appearance of the upper and lower surfaces was visually evaluated. Evaluation criteria were as follows.

### Evaluation criteria

○: Both the upper and lower surfaces have a uniform coating film appearance, and have no unevenness.
○Δ: The coating films of the upper and lower surfaces have a part visually recognized as having slight unevenness, but have a substantially uniform coating film appearance as a whole (there is no problem in practical use).
Δ: The coating films of the upper and lower surfaces have a part visually recognized as having unevenness, and have an uneven coating film appearance as a whole (there is a problem in practical use).
×: The coating film on the horizontal lower surface side is visually recognized as having marked unevenness (there is a problem in practical use).

### Storage stability of coating material

Storage stability evaluation was carried out using F2 emulsions and pigment pastes used in the preparation of the cationic electrodeposition coating compositions of respective examples and comparative examples.
- F2 emulsion: Following adjustment of a solid content to 35% by mass, an emulsion was stored at 40°C for 4 weeks. After the storage, the emulsion was evaluated according to the following criteria.
- Pigment paste: A pigment paste used for the preparation of a coating material was stored at 40°C for 4 weeks. After the storage, the pigment paste was evaluated according to the following criteria.

### Evaluation criteria

○: Both of the F2 emulsion and the pigment paste exhibit almost no change and can be evaluated to be stable.
Δ: Although slight increase in viscosity is observed with at least one of the F2 emulsion and the pigment paste, the viscosity returned to the original by re-stirring, and there is no problem in practical use.
×: At least one of the F2 emulsion and the pigment paste exhibits great increase in viscosity and is judged to be poor in coating material stability.

**[Table 1]**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Type of chemical conversion treatment | | Zr | Zr | Zr | Zr | Zr | Zr | Zr | Zr | Zr | Zinc phosphate | Zr |
| La | La oxide (% by mass) | 0.125 | 0.125 | 0.125 | 0.125 | 0.125 | 0.125 | 0.125 | | 0.125 | 0.125 | |
| | La lactate (% by mass) | | | | | | | | 0.125 | | | |
| Nd | Nd oxide (% by mass) | | | | | | | | | | | 0.125 |
| Zn | Zinc acetate (% by mass) | | | | | | | | | | | |
| Ti | Fluorotitanic acid (% by mass) | | | | | | | | | | | |
| Zr | Fluorozirconic acid (% by mass) | | | | | | | | | | | |
| Component (D) | Nonionic polyacrylamide resin (13,000,000) | 0.03% | | | | | | | | | | |
| | Cationic polyacrylamide resin (8,000,000) | | 0.02% | | | | | | | | | |
| | Strongly cationic polyacrylamide resin (8,000,000) | | | 0.02% | | | | | 0.02% | 0.02% | 0.02% | 0.02% |
| | Strongly cationic polyacrylamide resin (3,000,000) | | | | 0.03% | | | | | | | |
| | High molecular weight amine-modified epoxy resin (20,000) | | | | | 11% | | | | | | |
| | High molecular weight amine-modified epoxy resin (1,000,000) | | | | | | 11% | | | | | |
| | Chitosan (about 3,000,000) | | | | | | | 0.1% | | | | |
| | Amine-modified epoxy resin (6,000) | | | | | | | | | | | |
| | Acrylic microgel | | | | | | | | | | | |
| Pigment paste (1) (Bi) (% by mass) | | 0.1 | 0.1 | 0.1 | 0.1 | 0.1 | 0.1 | 0.1 | 0.1 | | 0.1 | 0.1 |
| Pigment paste (2) (Sn) (% by mass) | | | | | | | | | | 0.25 | | |
| Coating material viscosity at 23°C of electrodeposition coating composition (mPa·s) | | 5 | 5 | 5 | 5 | 5 | 5 | 5 | 5 | 5 | 5 | 5 |
| Coating film viscosity at 105°C of deposited electrodeposition coating film (Pa·s) | | 7 | 7 | 7 | 7 | 7 | 7 | 7 | 7 | 7 | 7 | 9 |
| Static viscosity at 105°C of deposited electrodeposition coating film (Pa·s) | | 1500 | 2000 | 3000 | 1500 | 1000 | 2000 | 1500 | 3000 | 1500 | 3000 | 3500 |
| Edge corrosion test (film thickness: 20 µm) | | ○ | ○ | ○ | ○ | ○ | ⊙ | ○Δ | ⊙ | ○Δ | ⊙ | ○Δ |
| Edge corrosion test (film thickness: 40 µm) | | ○Δ | ○Δ | ○ | ○ | ○Δ | ○ | Δ | ○ | ○Δ | ○ | Δ |
| Ra of cured electrodeposition coating film | | 0.25 | 0.23 | 0.25 | 0.2 | 0.28 | 0.28 | 0.2 | 0.28 | 0.2 | 0.26 | 0.26 |
| Visual evaluation of appearance of cured coating film | | ○Δ | ○ | ○ | ○ | ○ | ○ | ○ | ○ | ○ | ○ | ○ |
| Storage stability of coating material | | ○ | ○ | ○ | ○ | ○ | ○ | Δ | Δ | ○ | ○ | ○ |

**[Table 2]**

| | | Comparative Example 1 | Comparative Example 2 | Comparative Example 3 | Comparative Example 4 | Comparative Example 5 | Comparative Example 6 | Reference Example 1 | Reference Example 2 |
|---|---|---|---|---|---|---|---|---|---|
| Type of chemical | conversion treatment | Zr | Zr | Zr | Zr | Zr | Zr | Zr | Zr |
| La | La oxide (% by mass) | | | | | | | 0.125 | 0.125 |
| | La lactate (% by mass) | | | | | | | | |
| Zn | Nd oxide (% by mass) | | | | 0.075 | | | | |
| Ti | Zinc acetate (% by mass) | | | | | 0.05 | | | |
| Zr | Fluorotitanic acid (% by mass) | | | | | | 0.05 | | |
| Component (D) | Nonionic polyacrylamide resin (13,000,000) | | | | | | | | |
| | Cationic polyacrylamide resin (8,000,000) | | | | | | | | |
| | Strongly cationic polyacrylamide resin (8,000,000) | | | | | | | | |
| | Strongly cationic polyacrylamide resin (3,000,000) | | | | | | | | |
| | High molecular weight amine-modified epoxy resin (20,000) | | 11% | | 11% | 11% | 11% | | |
| | High molecular weight amine-modified epoxy resin (1,000,000) | | | | | | | | |
| | Chitosan (about 3,000,000) | | | | | | | | |
| | Amine-modified epoxy resin (6,000) | | | | | | | | 11% |
| | Acrylic microgel | | | 11% | | | | | |
| Pigment paste (1) (Bi) (% by mass) | | 0.1 | 0.1 | 0.1 | 0.1 | 0.1 | 0.1 | 0.1 | 0.1 |
| Pigment paste (2) (Sn) (% by mass) | | | | | | | | | |
| Coating material viscosity at 23°C of electrodeposition coating composition (mPa·s) | | 5 | 5 | 5 | 5 | 6 | 6 | 5 | 5 |
| Coating film viscosity at 105°C of deposited electrodeposition coating film (Pa·s) | | 6 | 7 | 30 | 50 | 20 | 80 | 7 | 30 |
| Static viscosity at 105°C of deposited electrodeposition coating film (Pa·s) | | 300 | 500 | 6000 | 3000 | 4000 | 5000 | 1000 | 1000 |
| Edge corrosion test (film thickness: 20 µm) | | × | Δ× | Δ× | Δ× | Δ× | Δ× | O | ○ |
| Edge corrosion test (film thickness: 40 µm) | | × | Δ× | × | × | × | × | Δ× | Δ× |
| Ra of cured electrodeposition coating film | | 0.25 | 0.35 | 0.35 | 0.55 | 0.6 | 0.52 | 0.2 | 0.2 |
| Visual evaluation of appearance of cured coating film | | ○ | ○Δ | Δ | × | × | × | ○ | ○ |
| Storage stability of coating material | | ○ | ○ | ○ | - | - | - | ○ | ○ |

In all the cases of using the cationic electrodeposition coating compositions of the examples, a good rust prevention property and good coating film appearance were obtained. They were superior also in coating material stability. Further, the cationic electrodeposition coating compositions of the examples were confirmed to afford a good edge part rust prevention property even either when a cured electrodeposition coating film having a film thickness of 20 µm is formed or when a cured electrodeposition coating film having a film thickness of 40 µm was formed.

Comparative Example 1 is an example of a composition containing none of a Group-3 element compound (C) and a cationic or nonionic resin (D). In this example, the edge part rust prevention property was severely poor.

Comparative Example 2 is an example of a composition containing no Group-3 element compound (C). Also in this example, the edge part rust prevention property was poor.

Comparative Example 3 is an example of a composition containing no Group-3 element compound (C) and containing an acrylic microgel instead of the Component (D). Also in this example, the edge part rust prevention property was poor.

Comparative Examples 4 to 6 are examples of a composition containing other metal compounds instead of the Group-3 element compound (C). In these examples, the edge part rust prevention property was somewhat improved, but the coating film appearance of the cured electrodeposition coating films deteriorated.

In each of Comparative Examples 4 to 6, a coating material storage stability test like that of other examples and comparative examples could not be carried out because an apparent increase in viscosity was confirmed during the preparation of a cationic electrodeposition coating composition.

Reference Example 1 is an example of a composition containing a Group-3 element compound (C) but containing no cationic or nonionic resin (D). In this example, some rust prevention property was obtained, but the cured electrodeposition coating films were poorer in edge part rust prevention property at larger film thickness.

Reference Example 2 is an example of a composition containing a Group-3 element compound (C), in which the molecular weight of a cationic or nonionic resin is less than 10,000. Also in this example, some rust prevention property was obtained, but the cured electrodeposition coating films were poorer in edge part rust prevention property at larger film thickness.

### INDUSTRIAL APPLICABILITY

It is possible to form a cured electrodeposition coating film being superior in rust prevention properties, especially, an edge part rust prevention property, and having a superior coating film appearance by performing electrodeposition coating using a cationic electrodeposition coating composition of the present invention. The cationic electrodeposition coating composition of the present invention can be suitably used, for example, in forming a thick cured electrodeposition coating film. According to the present invention, there is provided diversity with respect to a cured electrodeposition coating film formed in electrodeposition coating.

## Claims

1. A cationic electrodeposition coating composition comprising an amine-modified epoxy resin (A), a curing agent (B), a Group-3 element compound (C), and a cationic or nonionic resin (D), wherein
the amine-modified epoxy resin (A) has a number-average molecular weight within a range of 1,000 to 5,000, and
the cationic or nonionic resin (D) has a number-average molecular weight of 10,000 or more.

2. The cationic electrodeposition coating composition according to claim 1, wherein the cationic or nonionic resin (D) is one or more species selected from the group consisting of a polyacrylamide resin, a chitosan resin, and an amine-modified epoxy resin.

3. The cationic electrodeposition coating composition according to claim 2, wherein the polyacrylamide resin is a cationic polyacrylamide resin.

4. The cationic electrodeposition coating composition according to any one of claims 1 to 3, wherein the Group-3 element compound (C) is one or more species selected from the group consisting of lanthanum oxide, lanthanum hydroxide, neodymium oxide, neodymium hydroxide, a mixture of lanthanum oxide and an organic acid, a mixture of lanthanum hydroxide and an organic acid, a mixture of neodymium oxide and an organic acid, and a mixture of neodymium hydroxide and an organic acid.

5. The cationic electrodeposition coating composition according to any one of claims 1 to 4, wherein
a deposited electrodeposition coating film of the cationic electrodeposition coating composition has a coating film viscosity of 10 Pa·s or less at 105°C, and
the deposited electrodeposition coating film has a static viscosity of 200 to 5000 Pa·s at 105°C.

6. The cationic electrodeposition coating composition according to any one of claims 1 to 5, wherein the cationic electrodeposition coating composition has a coating material viscosity of 10 mPa·s or less at 23°C.

7. The cationic electrodeposition coating composition according to any one of claims 1 to 6, wherein the cationic electrodeposition coating composition further comprises a bismuth compound and the bismuth compound has an average particle size of 1 to 500 nm.

8. A method for forming a cured electrodeposition coating film, comprising a step of performing electrodeposition coating by immersing an object to be coated in the cationic electrodeposition coating composition according to any one of claims 1 to 7, and then forming a cured electrodeposition coating film having a film thickness of 25 to 50 µm on the object to be coated by performing heating and curing.

9. The method for forming a coating film according to claim 8, wherein the object to be coated has an edge part, and in an event that the object to be coated having the cured electrodeposition coating film formed has been subjected to a salt water spray test, a number of rust colonies formed per 1 cm² of a coated edge part is less than 5 colonies/cm².

## Patentansprüche

1. Kationische Galvanisierungs-Beschichtungszusammensetzung, umfassend ein Amin-modifiziertes Epoxidharz (A), ein Härtungsmittel (B), eine Verbindung eines Gruppe-3-Elements (C) und ein kationisches oder nichtionisches Harz (D), wobei
das Amin-modifizierte Epoxidharz (A) ein zahlenmittleres Molekulargewicht im Bereich von 1.000 bis 5.000 aufweist und
das kationische oder nichtionische Harz (D) ein zahlenmittleres Molekulargewicht von 10.000 oder mehr aufweist.

2. Kationische Galvanisierungs-Beschichtungszusammensetzung nach Anspruch 1, wobei das kationische oder nichtionische Harz (D) eine oder mehrere Spezies ist, die aus der aus einem Polyacrylamidharz, einem Chitosanharz und einem Amin-modifizierten Epoxidharz bestehenden Gruppe ausgewählt sind.

3. Kationische Galvanisierungs-Beschichtungszusammensetzung nach Anspruch 2, wobei das Polyacrylamidharz ein kationisches Polyacrylamidharz ist.

4. Kationische Galvanisierungs-Beschichtungszusammensetzung nach einem der Ansprüche 1 bis 3, wobei die Verbindung des Gruppe-3-Elements (C) eine oder mehrere Spezies ist, die aus der aus Lanthanoxid, Lanthanhydroxid, Neodymoxid, Neodymhydroxid, einem Gemisch aus Lanthanoxid und einer organischen Säure, einem Gemisch aus Lanthanhydroxid und einer organischen Säure, einem Gemisch aus Neodymoxid und einer organischen Säure und einem Gemisch aus Neodymhydroxid und einer organischen Säure bestehenden Gruppe ausgewählt sind.

5. Kationische Galvanisierungs-Beschichtungszusammensetzung nach einem der Ansprüche 1 bis 4, wobei
ein abgeschiedener Galvanisierungsbeschichtungsfilm der kationischen Galvanisierungs-Beschichtungszusammensetzung eine Beschichtungsfilmviskosität von 10 Pa·s oder weniger bei 105 °C aufweist und
der abgeschiedene Galvanisierungsbeschichtungsfilm eine statische Viskosität von 200 bis 5000 Pa·s bei 105 °C aufweist.

6. Kationische Galvanisierungs-Beschichtungszusammensetzung nach einem der Ansprüche 1 bis 5, wobei die kationische Galvanisierungs-Beschichtungszusammensetzung eine Viskosität des Beschichtungsmaterials von 10 mPa·s oder weniger bei 23 °C aufweist.

7. Kationische Galvanisierungs-Beschichtungszusammensetzung nach einem der Ansprüche 1 bis 6, wobei die kationische Galvanisierungs-Beschichtungszusammensetzung weiters eine Bismutverbindung umfasst und wobei die Bismutverbindung eine mittlere Teilchengröße von 1 bis 500 nm aufweist.

8. Verfahren zur Bildung eines gehärteten Galvanisierungsbeschichtungsfilms, umfassend einen Schritt des Durchführens einer Galvanisierungsbeschichtung durch Eintauchen eines zu beschichtenden Gegenstands in eine kationische Galvanisierungs-Beschichtungszusammensetzung nach einem der Ansprüche 1 bis 7 und dann Bilden eines gehärteten Galvanisierungsbeschichtungsfilms mit einer Filmdicke von 25 bis 50 µm auf dem zu beschichtenden Gegenstand durch Erhitzen und Härten.

9. Verfahren zur Bildung eines Beschichtungsfilms nach Anspruch 8, wobei der zu beschichtende Gegenstand einen Randabschnitt aufweist und wobei, falls der zu beschichtende Gegenstand, der den gebildeten gehärteten Galvanisierungsbeschichtungsfilm aufweist, einem Salzwassersprühtest unterzogen wurde, eine Anzahl von Rostkolonien, die pro 1 cm² eines beschichteten Randabschnitts gebildet wurden, weniger als 5 Kolonien/cm² beträgt.

## Revendications

1. Composition de revêtement par électrodéposition cationique comprenant une résine époxy modifiée par amine (A), un agent de durcissement (B), un composé (C) d'un élément du groupe 3, et une résine cationique ou non ionique (D), dans laquelle
la résine époxy modifiée par amine (A) présente un poids moléculaire moyen en nombre dans une plage de 1 000 à 5 000, et
la résine cationique ou non ionique (D) présente un poids moléculaire moyen en nombre de 10 000 ou plus.

2. Composition de revêtement par électrodéposition cationique selon la revendication 1, dans laquelle la résine cationique ou non ionique (D) est une ou plusieurs espèces sélectionnées dans le groupe constitué d'une résine de polyacrylamide, d'une résine de chitosane, et d'une résine époxy modifiée par amine.

3. Composition de revêtement par électrodéposition cationique selon la revendication 2, dans laquelle la résine de polyacrylamide est une résine de polyacrylamide cationique.

4. Composition de revêtement par électrodéposition cationique selon l'une quelconque des revendications 1 à 3, dans laquelle le composé (C) d'un élément du groupe 3 est une ou plusieurs espèces choisies dans le groupe constitué d'oxyde de lanthane, d'hydroxyde de lanthane, d'oxyde de néodyme, d'hydroxyde de néodyme, d'un mélange d'oxyde de lanthane et d'un acide organique, d'un mélange d'hydroxyde de lanthane et d'un acide organique, d'un mélange d'oxyde de néodyme et d'un acide organique, et d'un mélange d'hydroxyde de néodyme et d'un acide organique.

5. Composition de revêtement par électrodéposition cationique selon l'une quelconque des revendications 1 à 4, dans laquelle
un film de revêtement par électrodéposition déposé de la composition de revêtement par électrodéposition cationique présente une viscosité de film de revêtement de 10 Pa•s ou moins à 105°C, et
le film de revêtement par électrodéposition déposé présente une viscosité statique de 200 à 5 000 Pa•s à 105°C.

6. Composition de revêtement par électrodéposition cationique selon l'une quelconque des revendications 1 à 5, dans laquelle la composition de revêtement par électrodéposition cationique présente une viscosité de matériau de revêtement de 10 mPa•s ou moins à 23°C.

7. Composition de revêtement par électrodéposition cationique selon l'une quelconque des revendications 1 à 6, dans laquelle la composition de revêtement par électrodéposition cationique comprend en outre un composé de bismuth et le composé de bismuth présente une taille de particule moyenne de 1 à 500 nm.

8. Procédé de formation d'un film de revêtement par électrodéposition durci, comprenant une étape d'exécution d'une application en revêtement par électrodéposition en immergeant un objet à revêtir dans la composition de revêtement par électrodéposition cationique selon l'une quelconque des revendications 1 à 7, et ensuite de formation d'un film de revêtement par électrodéposition durci ayant une épaisseur de film de 25 à 50 µm sur l'objet à revêtir en effectuant un chauffage et un durcissement.

9. Procédé de formation d'un film de revêtement selon la revendication 8, dans lequel l'objet à revêtir présente une partie de bord, et dans le cas où l'objet à revêtir présentant le film de revêtement par électrodéposition durci formé a été soumis à un test de pulvérisation d'eau salée, un nombre de colonies de rouille formées pour 1 cm² d'une partie de bord revêtue est inférieur à 5 colonies/cm².
